(19) Europäisches Patentamt / European Patent Office / Office européen des brevets

(11) EP 2 528 034 B1

(12) **EUROPEAN PATENT SPECIFICATION**

(45) Date of publication and mention
of the grant of the patent:
**06.03.2019 Bulletin 2019/10**

(21) Application number: **11734479.6**

(22) Date of filing: **13.01.2011**

(51) Int Cl.:
**G06K 9/00** (2006.01)

(86) International application number:
**PCT/JP2011/000150**

(87) International publication number:
**WO 2011/089872 (28.07.2011 Gazette 2011/30)**

(54) **IMAGE MANAGEMENT DEVICE, IMAGE MANAGEMENT METHOD, PROGRAM, RECORDING MEDIUM, AND INTEGRATED CIRCUIT**

BILDVERWALTUNGSVORRICHTUNG, BILDVERWALTUNGSVERFAHREN, PROGRAMM, AUFZEICHNUNGSMEDIUM UND INTEGRIERTE SCHALTUNG

DISPOSITIF DE GESTION D'IMAGE, PROCÉDÉ DE GESTION D'IMAGE, PROGRAMME, SUPPORT D'ENREGISTREMENT ET CIRCUIT INTÉGRÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.01.2010 JP 2010012468**

(43) Date of publication of application:
**28.11.2012 Bulletin 2012/48**

(73) Proprietor: **Panasonic Intellectual Property Corporation
of America
Torrance, CA 90503 (US)**

(72) Inventor: **MAEDA, Kazuhiko
Osaka-shi
Osaka 540-6207 (JP)**

(74) Representative: **Grünecker Patent- und Rechtsanwälte
PartG mbB
Leopoldstraße 4
80802 München (DE)**

(56) References cited:
JP-A- 2002 024 229       JP-A- 2002 215 643
JP-A- 2004 318 603       JP-A- 2005 056 387
JP-A- 2005 107 885       JP-A- 2005 148 900
JP-A- 2006 318 034       JP-A- 2006 523 334
JP-A- 2007 174 378       US-A1- 2005 105 803

• DAS M ET AL: "Automatic face-based image grouping for albuming", SYSTEMS, MAN AND CYBERNETICS, 2003. IEEE INTERNATIONAL CONFERENCE ON; [IEEE INTERNATIONAL CONFERENCE ON SYSTEMS, MAN, AND CYBERNETICS], IEEE, PISCATAWAY, NJ, USA, vol. 4, 5 October 2003 (2003-10-05), pages 3726-3731, XP010668196, DOI: 10.1109/ICSMC.2003.1244468 ISBN: 978-0-7803-7952-7

## Description

The present invention relates to image management technology, and particular relates to technology for effectively searching through a great quantity of images to find a desired image.

In recent years, digital cameras have become widespread, and photographers, i.e., users, have come to possess enormous quantities of images. The difficulty of selecting an image considered important by the user increases with the quantity of images.

For this reason, reordering images in descending order of user priority has proved necessary in order to allow the user to effectively search for a desired image. By ranking and displaying images accordingly, the user can more easily select a desired image by searching through highly-ranked images within the enormous quantity of images possessed by the user.

Conventional image ranking methods involve ranking images by evaluating the facial expression of persons appearing in each captured image, one at a time (e.g., Patent Literature 1), or ranking images by evaluating capture conditions for each image, such facial orientations, eye openness, and predetermined settings (e.g., Patent Literature 2). Further, Patent Literature 3 discloses a method for selecting an emphasis image from an image collection based on content recognition.

[Patent Literature]

[Patent Literature 1]
Japanese Patent Application Publication No. 2004-46591
[Patent Literature 2]
Japanese Patent Application Publication No. 2005-20446
[Patent Literature 3]
US 2005/105803 A1

However, according to conventional technology, a problem may arise in that, should a person of little importance to the user be inadvertently captured in an image with a positive facial expression or capture conditions, then this image may inadvertently be highly ranked and be found by the user among high-priority images.

In consideration of the above-described problem, the present invention aims to provide an image management device and image management method that allows images to be ranked and evaluated such that the user is enabled to easily find and select, among an enormous quantity of images, images in which persons considered important to the user appear.

This is achieved by the features of the independent claims.

Provided that features of a human face are defined by a predetermined standard, the image management device having the above-described structure calculates the object priority, in this case, the priority of a human face that is an object included in an image, from an occurrence frequency of an object belonging to a cluster that represents the person whose face is included in the image. The image management device then calculates the image priority from the object priority so calculated, and ranks the image according to the resulting image priority. Thus, an image in which a frequently-occurring person is included has a higher rank. A user can more easily search an enormous number of images to find images in which a person of interest appears by searching through higher-ranked images, i.e., images having a high priority.

Fig. 1 illustrates a usage example of an image management device, with peripheral devices.
Fig. 2 is a functional configuration diagram of the image management device.
Fig. 3 illustrates a sample image group obtained from an image acquisition unit.
Fig. 4 illustrates examples of objects detected in images.
Fig. 5 shows an example of object occurrence information.
Fig. 6 shows an example of object feature amounts.
Fig. 7 is an illustration of cluster sorting.
Fig. 8 shows an example of cluster feature amounts.
Fig. 9 shows an example of cluster sorting information.
Fig. 10 is an illustration of co-occurrence relationships.
Fig. 11 shows an example of co-occurrence information.
Fig. 12 shows an example of similarity between objects and clusters.
Fig. 13 shows an example of accuracy of objects with respect to clusters.
Fig. 14 shows an example of evaluation values of objects with respect to clusters.
Fig. 15 shows an example of object priority.
Fig. 16 shows an example of image priority.
Fig. 17 shows an example of ranking results.
Fig. 18 illustrates the operations of Embodiment 1.
Fig. 19 illustrates a co-occurrence information generation process.
Fig. 20 illustrates an accuracy calculation process.
Fig. 21 shows an example of confidence factors.
Fig. 22 shows an example of support factors.
Fig. 23 is a functional configuration diagram of a variant image management device.
Fig. 24 is a functional configuration diagram of an entity unit.
Fig. 25 illustrates co-occurring entity detection in images.
Fig. 26 shows an example of entity occurrence information.

Fig. 27 shows an example of entity cluster sorting information.
Fig. 28 shows an example of co-occurrence information with respect to entity clusters.
Fig. 29 is a flowchart showing the operations of Embodiment 2.
Fig. 30 illustrates the co-occurrence information generation process pertaining to Embodiment 2.
Fig. 31 illustrates the accuracy calculation process pertaining to Embodiment 2.
Fig. 32 shows an example of confidence factors with respect to entity clusters.
Fig. 33 shows an example of support factors with respect to entity clusters.
Fig. 34 illustrates the accuracy calculation process pertaining to a variation of Embodiment 2.
Fig. 35 is a functional configuration diagram of a variant image management device 3500.
Fig. 36 shows an example of reliability information.
Fig. 37 is a flowchart showing the operations of Embodiment 3.
Fig. 38 illustrates a reliability calculation process.
Fig. 39 illustrates the accuracy calculation process pertaining to Embodiment 3.

An image management device serving as an Embodiment of the present invention is described below with reference to the drawings.

(1. Outline)

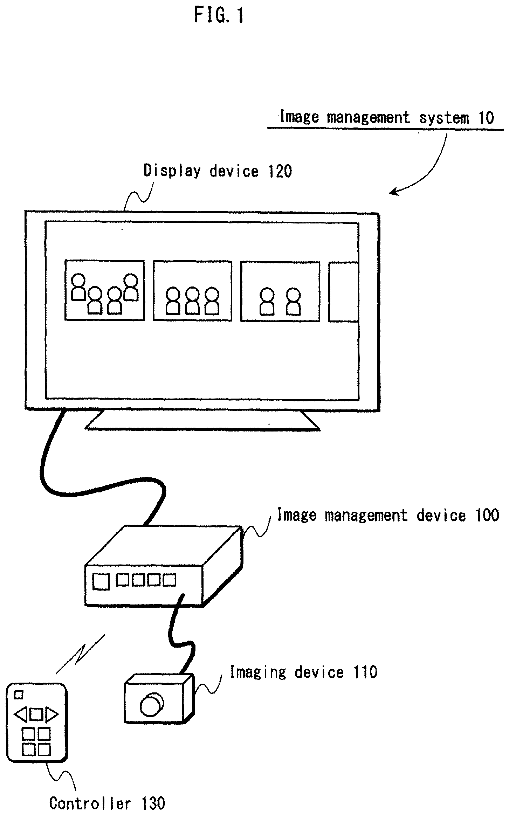

Fig. 1 is a system configuration diagram showing an image management system 10 made up of an image management device 100, which serves as an Embodiment of the present invention, and peripheral devices. The image management device 100 is connected to an imaging device 110 and to a display device 120. Also, the image management device 100 is user-controllable through a controller 130.

The imaging device 110 is device that captures images and stores the images so captured, such as a digital camera. The stored images are input to the image management device 100 via a cable, such a Universal Serial Bus (USB) cable.

Each of the aforementioned images is a collection of pixel value data, and may be a still image, such as a picture, or may be video. Here, the images are pictures or still images.

The display device 120 is a device such as a digital television, displaying the images output from the image management device 100 and connected to the image management device 100 via a High-Definition Multimedia Interface (HDMI) cable.

The image management device 100 has a group of images input thereto by the imaging device 110, ranks the images so received according to image priority, which is the degree of priority of each image, and outputs the resulting ranking to the display device 120. The image management device 100 then extracts any objects fitting a specific pattern from each of the images, and evaluates any image containing multiple objects rated by the user as having high priority as being a high-priority image. Therefore, the images can be searched in order of decreasing image priority. This enables the user to easily find and select an image considered more important.

An object is an element detected in an image according to a template stored in the image management device 100. The template contains information defining an object. For example, a particular template may have data indicating patterns of feature amounts (also termed features) for detecting a human face. Thus, a human face can be detected as an object by using the template.

The image management device 100 evaluates an object priority for each object, indicating a level of priority assigned to the object by the user. The object priority is evaluated once the image management device has sorted the objects into clusters, according to the quantity of objects belonging to the same cluster as the object being evaluated.

A cluster is a unit into which objects having similar object features are grouped upon sorting. For example, let the object be a person. In many cases, due to variations in capture conditions, the object features extracted from several images are not quite identical, even though the same person appears in all of the images. However, as long as the same person indeed appears in each image, then there is a high probability that the objects belong to the same cluster, given that the objects have similar object features despite not being identical. Therefore, by considering an object in the same cluster to represent the same person, a person imaged several times appears in several objects belonging to the same cluster. Thus, the object priority is evaluated as being high.

The image management device 100 pertaining to the present invention is described in further detail below.

(2. Embodiment 1)

Embodiment 1 describes an image management device 100 that ranks images by detecting a human face as an object, evaluating the priority of the human being as the object priority, and evaluating the image priority of an image according to the object priority.

(2-1. Outline)

The hardware configuration of the image management device 100 pertaining to Embodiment 1 of the present invention includes a USB input terminal that inputs images, an HDMI output terminal that outputs images, memory that stores data and programs, and a processor that executes programs.

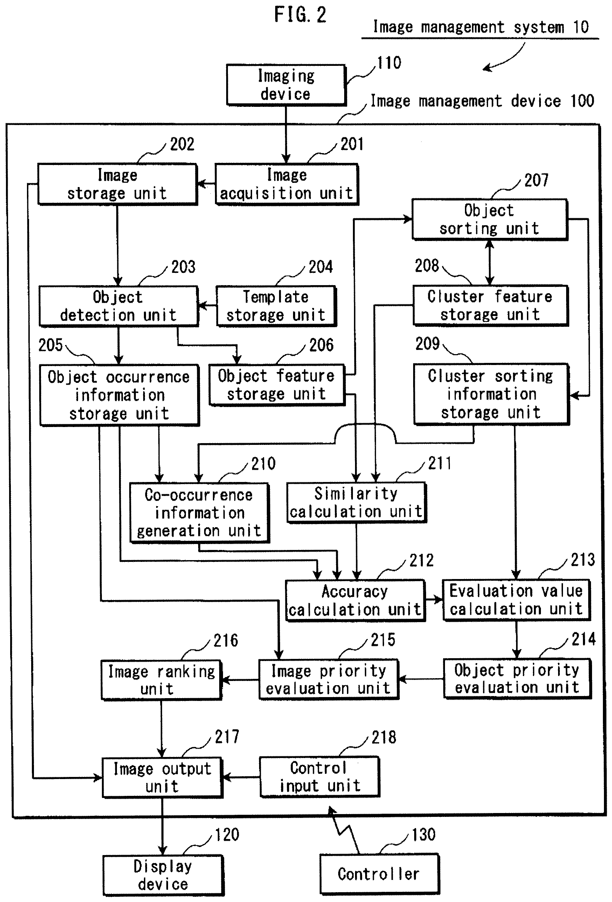

Fig. 2 is a block diagram showing the components of the image management device 100 pertaining to Embodiment 1 of the present invention, including peripheral devices.

As shown in Fig. 2, the image management device 100 is made up of an image acquisition unit 201, an image storage unit 202, an object detection unit 203, a template storage unit 204, an object occurrence information storage unit 205, an object feature storage unit 206, an object sorting unit 207, a cluster feature storage unit 208, a cluster sorting information storage unit 209, a co-occurrence information generation unit 210, a similarity calculation unit 211, an accuracy calculation unit 212, an evaluation value calculation unit 213, an object priority evaluation unit 214, an image priority evaluation unit 215, an image ranking unit 216, an image output unit 217, and a control input unit 218.

The image acquisition unit 201 acquires an image group stored in the imaging device 110 through an input interface, such as a USB input terminal. The image acquisition unit 201 assigns an image ID (IDentifier) 301 to each image in the group and, once each image has an image ID 301 associated with the image 302, stores the image group 300 in the image storage unit 202.

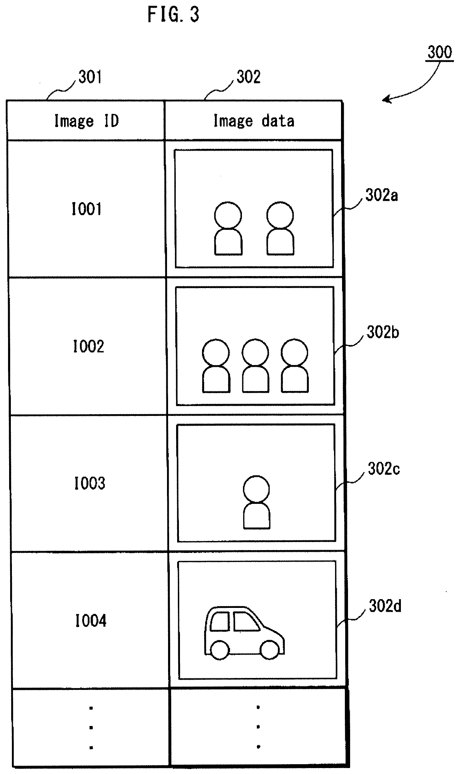

The image storage unit 202 stores the image ID 301 and every image 302 included in the image group 300 acquired by the image acquisition unit 201. The image storage unit 202 may be realized as memory, for example. Fig. 3 illustrates an example of the image group 300 as stored in the image storage unit 202. Fig. 3 will be explained in detail later.

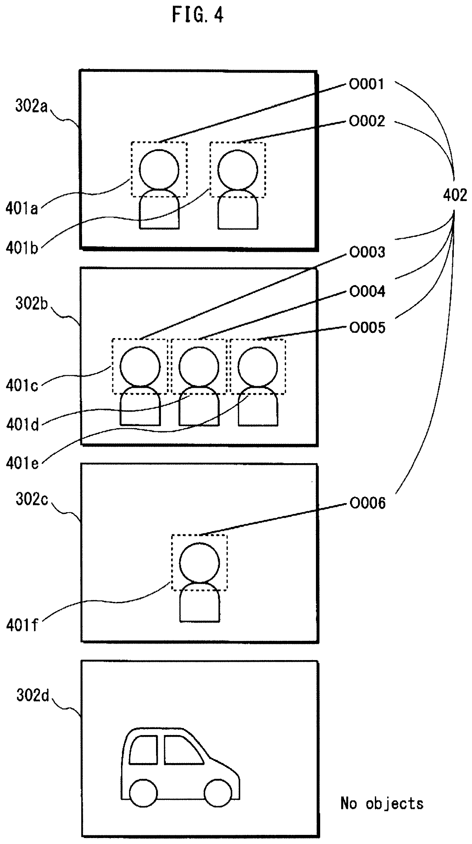

The object detection unit 203 extracts feature amounts from each image in the image group 300 stored in the image storage unit 202, detects objects using templates stored in the template storage unit 204, and assigns an object ID 402 to each detected object to identify that object. The functions of the object detection unit 203 are realized by, for example, having the processor execute programs stored in memory. Feature amounts will be explained in detail later. Fig. 4 illustrates an example of objects as detected in images. Fig. 4 will be explained in detail later. Furthermore, the object detection unit 203 stores, for each image, the image ID 301 and the object ID 402 of any objects detected therein in association as object occurrence information 500 in the object occurrence information storage unit 205, and stores, for each detected object, the object ID 402 and the object features 601, being features of that object, in association in the object feature storage unit 206.

The template storage unit 204 stores a template having information enabling the object detection unit 203 to detect objects within images. The template storage unit 204 may be realized as memory, for example. Here, the template is data indicating feature patterns pertaining to a human face. The template storage unit 204 stores the template as generated from training data, prepared in advance.

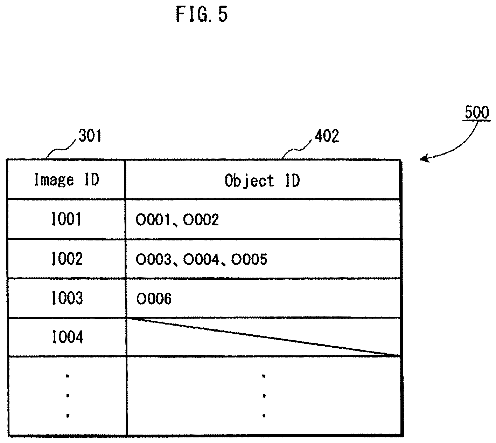

The object occurrence information storage unit 205 stores object occurrence information 500 for each image. The object occurrence information storage unit 205 may be realized as memory, for example. Fig. 5 illustrates an example of the object occurrence information 500 as stored in the object occurrence information storage unit 205. Fig. 5 will be explained in detail later.

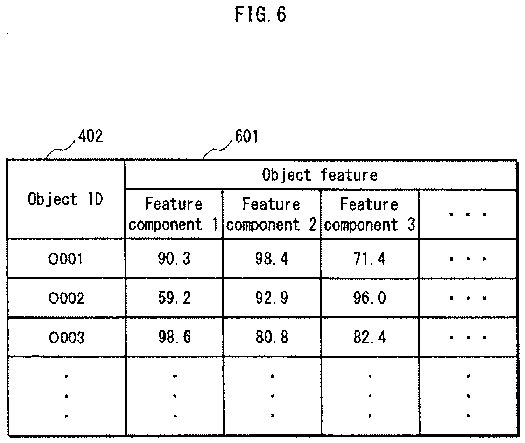

The object feature storage unit 206 stores the object feature 601 of each object detected by the object detection unit 203, along with the object ID 402 thereof. The object feature storage unit 206 may be realized as memory, for example. Fig. 6 illustrates an example of an object feature of an object stored in the object feature storage unit 206. Fig. 6 will be explained in detail later.

The object sorting unit 207 sorts objects into clusters according to the object feature of each object stored in the object feature storage unit 206 and the cluster feature 702 of each cluster stored in the cluster feature storage unit 208. The object sorting unit 207 also calculates the cluster feature 702 for a given cluster based on the object features of objects sorted therein. Further, the object sorting unit 207 assigns a cluster ID 703 to each cluster for identification purposes, then stores the calculated cluster feature 702 with the cluster ID 703 of the relevant cluster in the cluster feature storage unit 208. In addition, cluster sorting information 900 for each cluster, made up of the cluster ID 703, the object ID 402 of each object sorted into the cluster, and the quantity of objects sorted into the cluster, is stored in the cluster sorting information storage unit 209. The functions of the object sorting unit 207 are realized by, for example, having the processor execute programs stored in memory.

The cluster feature storage unit 208 stores the cluster features 702 of each cluster in association with the cluster ID 703 thereof. The cluster feature storage unit 208 may be realized as memory, for example. The cluster features 702 stored in the cluster feature storage unit 208 are updated by the object sorting unit 207 as required.

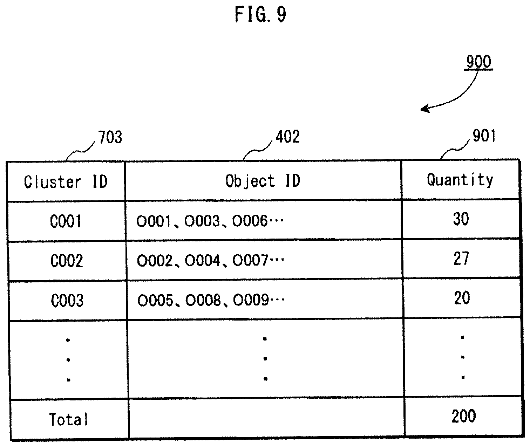

The cluster sorting information storage unit 209 stores the cluster sorting information 900 for each cluster. The cluster sorting information storage unit 209 may be realized as memory, for example. Fig. 9 illustrates an example of cluster sorting information 900 as stored in the cluster sorting information storage unit 209. Fig. 9 will be explained in detail later.

The co-occurrence information generation unit 210 generates co-occurrence information 1100 from the object occurrence information 500 stored in the object occurrence information storage unit 205 and the cluster sorting information stored in the cluster sorting information storage unit 209 by detecting co-occurrence relationships and states of non-cooccurrence for each image in the image group 300. The functions of the co-occurrence information generation unit 210 are realized by, for example, having the processor execute programs stored in memory. The co-occurrence information 1100 will be explained in detail later.

The similarity calculation unit 211 calculates a similarity 1201 indicating the extent to which the object features of the objects stored in the object feature storage unit 206 and the cluster features 702 stored in the cluster feature storage unit 208 are similar. The functions of the similarity calculation unit 211 are realized by, for example, having the processor execute programs stored in memory.

The accuracy calculation unit 212 calculates an accuracy 1301 used by the evaluation value calculation unit 213 to calculate an evaluation value 1401 according to the co-occurrence information 1100 generated by the co-occurrence information generation unit 210 and the similarity 1201 calculated by the similarity calculation unit 211. The functions of the accuracy calculation unit 212 are realized by, for example, having the processor execute programs stored in memory.

The evaluation value calculation unit 213 calculates an evaluation value 1401 for a given cluster of objects from the accuracy 1301 calculated by the accuracy calculation unit 212 and the quantity of objects sorted into the given cluster and stored in the cluster sorting information storage unit 209. The functions of the evaluation value calculation unit 213 are realized by, for example, having the processor execute programs stored in memory.

The object priority evaluation unit 214 evaluates an object priority 1501 for a given object according to the evaluation value 1401 calculated by the evaluation value calculation unit 213. The functions of the object priority evaluation unit 214 are realized by, for example, having the processor execute programs stored in memory.

The image priority evaluation unit 215 evaluates an image priority 1601 for a given image according to the object occurrence information 500 stored in the object occurrence information storage unit 205 and the object priority 1501 stored in the object priority evaluation unit 214. The functions of the image priority evaluation unit 215 are realized by, for example, having the processor execute programs stored in memory.

The image ranking unit 216 ranks the images in the image group 300 in order, according to the image priority 1601 evaluated by the image priority evaluation unit 215. The functions of the image ranking unit 216 are realized by, for example, having the processor execute programs stored in memory.

The image output unit 217 causes, via an HDMI output terminal or similar output interface, the display device 120 to display the image group 300 stored in the image storage unit 202 in the order determined by the image ranking unit 216. Also, the control input unit 218 is capable of modifying the display mode of the images so output according to received control signals. For example, should the quantity of images be too great to fit on a single screen, then the screen can be made to scroll so as to display images otherwise not displayed. The functions of the image output unit 217 are realized by, for example, having the processor execute programs stored in memory.

The control input unit 218 receives user controls produced on the controller 130 through an infra-red receiver or similar, and transmits corresponding control signals to the image output unit 217. The functions of the control input unit 218 are realized by, for example, having the processor execute programs stored in memory.

(2-2. Data)

Next, the information handled by the above-described image management device 100 is explained.

(2-2-1. Image Group)

The image group 300 is a plurality of images subject to ranking by the image management device 100. The image group 300 is generated by the image acquisition unit 201 from images input from the imaging device 110, then stored in the image storage unit 202 for use by the object detection unit 203 and the image output unit 217.

Fig. 3 illustrates the data configuration and a content example of the image group 300. As shown, the image group 300 is made up of an image ID 301 assigned to each image for identification, and of images 302.

The image ID 301 uniquely identifies each image within the image management device 100, being assigned by the image acquisition unit 201 so as to be in one-to-one correspondence with each image 302. The image ID 301 is generated by the image acquisition unit 201. For example, the image ID 301 may consist of a number assigned sequentially, starting at 1, as the image acquisition unit 201 acquires images from the imaging device 110, with the letter I added as a prefix thereto.

In the example shown in Fig. 3, the assigned image IDs 301 are 1001 for image 302a, 1002 for image 302b, 1003 for image 302c, and 1004 for image 302d.

When the images given in Fig. 3 are used below to describe a specific example, the image ID 301 assigned thereto is used for reference. For example, the image identified by the image ID 301 of 1001 is referred to as image 1001.

(2-2-2. Object Occurrence Information)

The object occurrence information 500 is information indicating which of the objects have been detected in each of the images. The object occurrence information 500 is generated by the object detection unit 203, and then stored in the object occurrence information storage unit 205 for use by the co-occurrence information generation unit 210, the accuracy calculation unit 212, and the image priority evaluation unit 215.

Fig. 4 illustrates an example of areas 401, in each of which the object detection unit 203 has detected an object, and the object IDs 402 of each object detected in the areas 401. Fig. 5 illustrates an example of the data structure of the object occurrence information 500 with content corresponding to Fig. 4.

As shown in Fig. 5, the object occurrence information 500 is a table in which the image ID 301 and the object ID 402 identifying each detected object are listed together for each image. Some images have only one object detected therein, while others have a several objects and yet others have no objects at all.

The object IDs 402 uniquely identify each of the objects within the image management device 100, being assigned by the object detection unit 203 so as to be in one-to-one correspondence with the objects. The object IDs 402 are generated by the object detection unit 203. For example, the object ID 402 may consist of a number assigned sequentially, starting at 1, as the object detection unit 203 detects objects, with the letter O added as a prefix thereto.

In the example shown in Fig. 4, the object IDs 402 assigned to the detected objects are O001 for the object detected in area 401a, 0002 for the object detected in area 401b, 0003 for the object detected in area 401c, O004 for the object detected in area 401d, 0005 for the object detected in area 401e, and 0006 for the object detected in area 401f.

When the objects given in Fig. 4 are used below to describe a specific example, the object ID 402 assigned thereto is used for reference. For example, the object identified by the object ID 402 O001 is referred to as object O001.

The object occurrence information 500 can be used to obtain the object ID 402 of any objects included in a specific image, and conversely, to obtain the image ID 301 of any image containing a specific object.

In the example shown in Fig. 5, the object occurrence information 500 makes clear that image 1002 includes object 0003, object 0004, and object 0005. Conversely, the object occurrence information 500 makes clear that the image in which object 0002 is included is image I001.

(2-2-3. Feature Amounts)

Feature amounts (also simply termed features) describe features pertaining to the distribution of pixel values for a plurality of pixels within an image. For example, a feature may be a vector made up of components taken from several values that indicate image characteristics. Image features are obtained using a Gabor filter and include the periodicity and direction of a distribution of pixel values within image data. Image features used to detect a human face make use of the periodicity and direction of a given distribution of pixel values to find the distance between two points recognized as being the eyes, or the distance from a point recognized as being the nose to a point recognized as being the mouth, and make these distances into vector components.

The object features 601 are features detected as objects among the features extracted by the object detection unit 203, being generated by the object detection unit 203 and stored in the object feature storage unit 206 along with the object IDs 402. The object features 601 are then used by the object sorting unit 207 and the similarity calculation unit 211.

Fig. 6 illustrates the data configuration and a content example of one object feature 601 stored in the object feature storage unit 206. Here, the object feature is made up of several feature components, including feature component 1, feature component 2, and feature component 3.

As similarly shown in Fig. 6, feature component 1 is 90.3, feature component 2 is 98.4, and feature component 3 is 71.4 for the object feature 601 of object O001.

(2-2-4. Clusters)

Cluster-related data, i.e., the cluster IDs 703, the cluster features 702, and the cluster sorting information 900, are explained below.

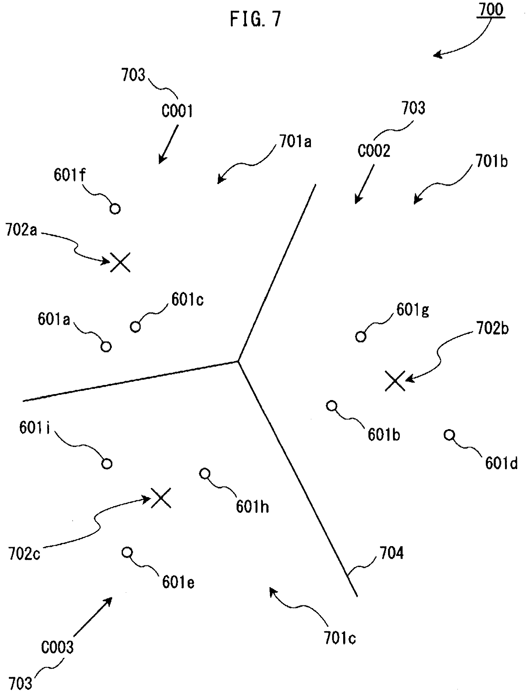

Fig. 7 conceptually illustrates the sorting of objects into clusters by the object sorting unit 207. Here, the object features 601 for each of object O001, object 0002, object O003, object O004, object 0005, and O006 are 601a, 601b, 601c, 601d, 601e, and 601f, respectively. Throughout the remainder of Embodiment 1, the same correspondence is retained between objects and reference symbols.

As shown in Fig. 7, feature space 700 includes three clusters, namely cluster 701a, cluster 701b, and 701c, being separated by a cluster border 704.

The cluster IDs 703 uniquely identify each of the clusters within the image management device 100, being assigned by the object sorting unit 207 so as to be in one-to-one correspondence with the clusters. The cluster IDs 703 are generated by the object sorting unit 207. For example, the cluster IDs 703 may consist of a number assigned sequentially, starting at 1, as the object sorting unit 207 generates the clusters, with the letter C added as a prefix thereto.

In the example shown in Fig. 7, the cluster IDs 703 assigned to the clusters are C001 for cluster 701a, C002 for cluster 701b, and C003 for cluster 701c.

When the clusters given in Fig. 7 are used below to describe a specific example, the cluster ID 703 assigned to each cluster is used for reference. For example, the cluster identified by the cluster ID 703 of C001 is called cluster C001.

The cluster feature 702 is a feature amount characterizing a cluster, being a value that represents the object features 601 of all objects included in the cluster. The cluster feature 702 is stored in the cluster feature storage unit, generated and discarded as required by the object sorting unit 207.

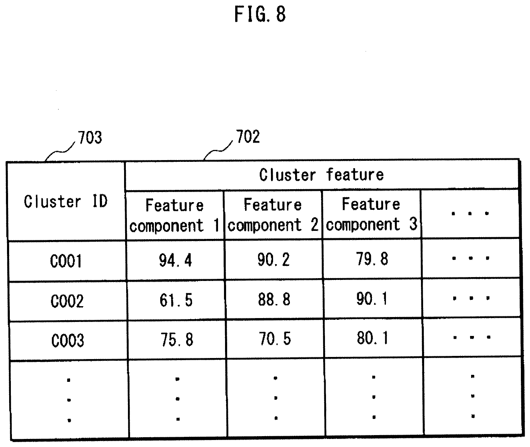

Fig. 8 illustrates an example of the data structure of the cluster feature 702 and of content corresponding to the clusters from Fig. 7. The data structure of the cluster feature 702 is similar to that of the object feature 601.

For example, the cluster feature 702 is calculated by taking the arithmetic mean of the object features 601 for each object included in the cluster.

In the example shown in Fig. 8, feature component 1 is 94.4, feature component 2 is 90.2, and feature component 3 is 79.8 for the cluster feature 702 of cluster C001.

The cluster sorting information 900 indicates which of the objects have been sorted into each cluster by the object sorting unit 207. The cluster sorting information 900 is generated by the object sorting unit 207, and then stored in the cluster sorting information storage unit 209 for use by the co-occurrence information generation unit 210 and the evaluation value calculation unit 213.

Fig. 9 illustrates an example of the data structure of cluster sorting information 900 and of content corresponding to the clusters from Fig. 7. The cluster sorting information 900 includes, for each cluster, the cluster ID 703, the object ID 402 of each object belonging to the cluster, and the quantity 901 of objects belonging to the cluster.

In the example shown in Fig. 7, cluster C001 is indicated by the reference sign 701 and includes object O001, object O003, and object O006, the object features 601 of which are 601a, 601c, and 601f, respectively. In the corresponding example shown in Fig. 9, object O001, object O003, and object O006 belong to the cluster sorting information 900 of cluster C001, and the total quantity 901 of objects belonging to cluster C001 is 30.

(2-2-5. Co-occurrence Information)

First, co-occurrence and non-cooccurrence are explained, followed by the details of the co-occurrence information 1100.

Generally speaking, co-occurrence designates two phenomena occurring together. For example, when an object belonging to cluster A and an object belonging to cluster B appear in a single image, then the phenomenon of an object belonging to cluster A being included and the phenomenon of an object belonging to cluster B being included are said to be co-occurring phenomena.

Here, given that the phenomenon of an object belonging to cluster A being included and the phenomenon of an object belonging to cluster B being included are co-occurring phenomena, cluster A and cluster B are said to be co-occurring clusters. That is, if an object belonging to cluster A and an object belonging to cluster B are both included in a single image, then cluster A and cluster B are co-occurring clusters.

Also, when cluster A and cluster B are co-occurring clusters, a co-occurrence relationship is said to exist between the two. To be precise, the co-occurrence relationship between cluster A and cluster B exists if the phenomenon of an object belonging to cluster B being included occurs in the presence of the phenomenon of an object belonging to cluster A being included.

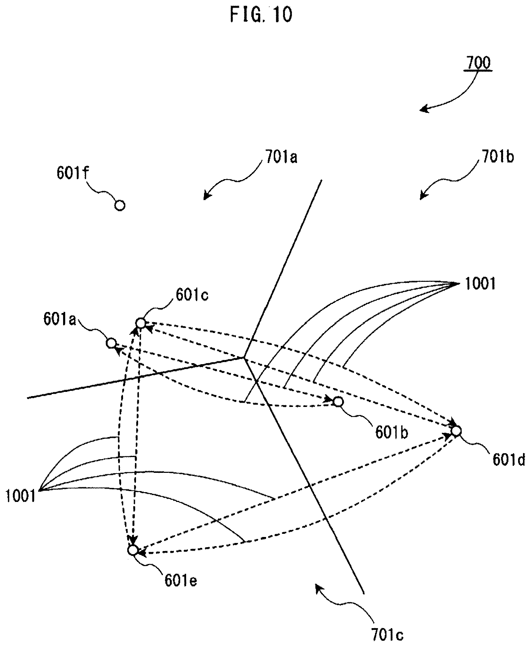

Fig. 10 illustrates co-occurrence relationships. The dashed lines 1001 indicate co-occurrence relationships, linking objects that appear together in the same image.

For example, if object b is included in an image that includes object a, then an arrow 1001 is drawn from object a toward object b. Similarly, if object a is included in an image in which object b is included, then an arrow 1001 is drawn from object b toward object a. Thus, when an arrow 1001 is drawn from object a belonging to cluster A toward object b belonging to cluster B, a co-occurrence relationship exists between cluster A and cluster B.

In the example shown in Fig. 10, object O002, corresponding to 601b, is included in an image in which object O001, corresponding to 601a, is also included. Therefore, a co-occurrence relationship exists from cluster C001 (701a) to cluster C002 (701b), to which the two respectively belong. Concurrently, object O001 is included in an image in which object O002 is included. Therefore, the co-occurrence relationship can also be said to exist from C002 to C001.

Similarly, non-cooccurrence signifies an absence of co-occurrence. Here, in particular, the term indicates that, for a given image, a cluster has no co-occurrence relationships with any other clusters. That is, non-cooccurrence is a phenomenon of an object belonging to a cluster being included a single image only.

In the example shown in Fig. 10, object O006, corresponding to 601f and not connected by any arrows, is included alone in the image, with no other objects being included in the same image thereas. Thus, cluster C001 (701a) to which object O006 belongs is in a state of non-cooccurrence for the image in which object O006 is included.

The co-occurrence information 1100 is information pertaining to cluster co-occurrence, being generated by the co-occurrence information generation unit 210 and used by the accuracy calculation unit 212.

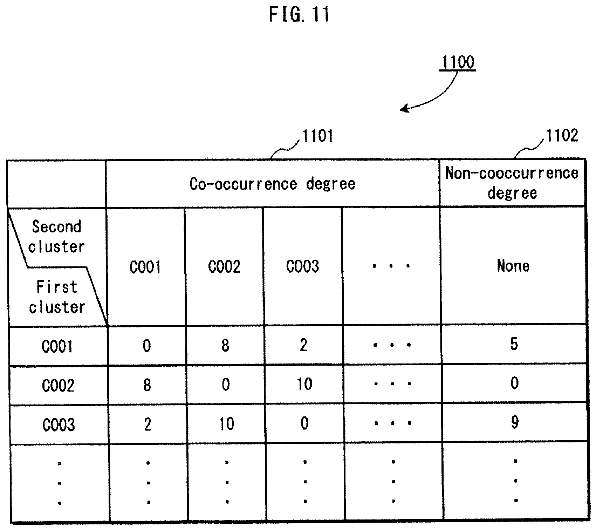

Fig. 11 illustrates the data configuration and a content example of the co-occurrence information 1100. The co-occurrence information 1100 is made up of a co-occurrence degree 1101, indicating the degree to which a co-occurrence relationship for a particular cluster with respect to another exists for each image in the image group 300, and a non-cooccurrence degree 1102 indicating the degree to which each cluster is in a state of non-cooccurrence for each image in the image group 300.

Here, the co-occurrence degree 1101 is the number of times a co-occurrence relationship is detected in the image group 300. The co-occurrence degree 1101 of cluster A with respect to cluster B is thus the number of times a co-occurrence relationship is detected for cluster A with respect to cluster B in the image group 300.

Here, the non-cooccurrence degree 1102 is the number of times a non-cooccurrence relationship is detected within the image group 300. The non-cooccurrence degree 1102 of cluster A is the number of times a state of non-cooccurrence is detected for cluster A within the image group 300, necessarily matching the number of images in which an object belonging to cluster A is included alone.

In the example shown in Fig. 11, the co-occurrence degree 1101 of cluster C001 is 0 with respect to cluster C001, 8 with respect to cluster C002, and 2 with respect to cluster C003, while the non-cooccurrence degree 1102 of cluster C001 is 5.

In the previously-described example, the co-occurrence degree 1101 of cluster C001 with respect to cluster C001 is 0. This signifies that, among all images in which an object belonging to cluster C001 is included, no other object also belonging to cluster C001 is included.

Also, the co-occurrence degree 1101 of cluster C001 with respect to cluster C002 is 8. T his signifies that, among all images in which an object belonging to cluster C001 is included, an object belonging to cluster C002 is also included in eight images.

Further, the non-cooccurrence degree 1102 of cluster C001 is 5. This signifies that an object belonging to cluster C001 is included in five images in which no other object is included. That is, there are five images in which an object included in cluster C001 is included alone.

(2-2-6. Similarity)

The similarity 1201 is a value indicating the degree to which the object feature 601 of an object and the cluster feature 702 of a cluster resemble each other. The similarity 1201 is generated by the similarity calculation unit 211 and used by the accuracy calculation unit 212.

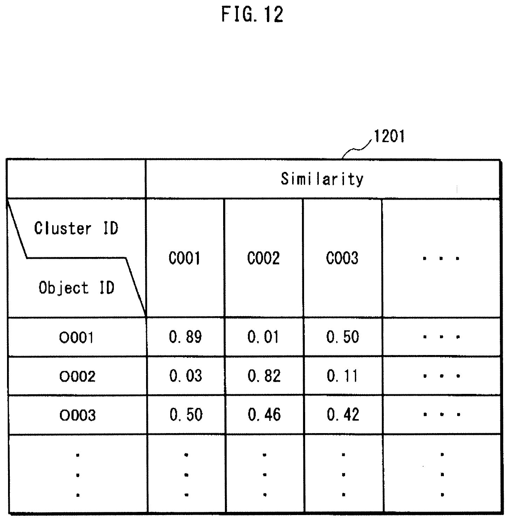

Fig. 12 illustrates the data configuration and a content example of the similarity 1201. The similarity 1201 is made up of numerical values corresponding to each pair of an object ID 402 and of a cluster ID 703.

For example, the similarity 1201 may be expressed by the dot product of the vector given by the object feature 601 of an object and the vector given by the cluster feature 702 of a relevant cluster in feature space 700, calculated from the difference between the object feature 601 of an object and the cluster feature 702 of a cluster, or found using some other method. Here, the similarity 1201 is calculated from the difference between the object features 601 of an object and the cluster features 702 of a cluster.

In the example shown in Fig. 12, the similarity 1201 between object 003 and cluster C001, cluster C002, and cluster C003 is 0.50, 0.46, and 0.42, respectively.

(2-2-7. Accuracy)

The accuracy 1301 is a value indicating the strength of the relationship between objects and clusters using not only the similarity 1201 but also the co-occurrence information 1100. The accuracy 1301 is generated by the accuracy calculation unit 212 and used by the evaluation value calculation unit 213. A more precise evaluation of relationship strength can be determined by using the accuracy 1301 than can be obtained using the similarity 1201 alone.

The accuracy 1301 of object a with respect to cluster B is calculated on the basis of the similarity 1201 between object a and cluster B and the co-occurrence information 1100 of cluster B. The calculation method will be explained in detail later.

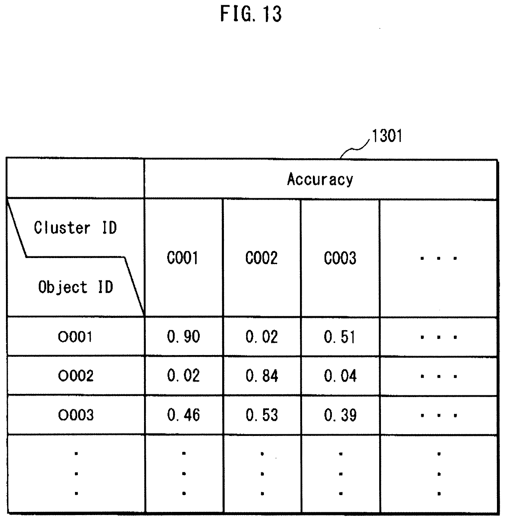

Fig. 13 illustrates the data configuration and a content example of the accuracy 1301. The accuracy 1301 is made up of numerical values corresponding to each pair of an object ID 402 and of a cluster ID 703.

In the example shown in Fig. 13, the accuracy 1301 between object 003 and cluster C001, cluster C002, and cluster C003 is 0.46, 0.53, and 0.39, respectively.

(2-2-8. Evaluation Values)

The evaluation value 1401 is a degree of priority calculated for each pair of an object and a cluster. The later-described object priority 1501 is evaluated according to the evaluation value 1401. The evaluation value 1401 is generated by the evaluation value calculation unit 213 and used by the object priority evaluation unit 214.

The evaluation value 1401 for an object a and a cluster B is found by calculating the product of the accuracy 1301 of object a with respect to cluster B and the quantity 901 of objects belonging to cluster B.

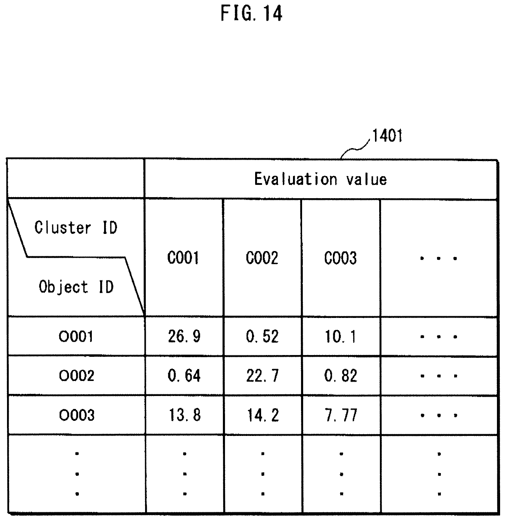

Fig. 14 illustrates the data configuration and a content example of the evaluation value 1401. The evaluation value 1401 is made up of numerical values corresponding to each pair of an object ID 402 and of a cluster ID 703.

In the example shown in Fig. 14, the evaluation value 1401 for object O003 with respect to cluster C001, cluster C002, and cluster C003 is 13.6, 14.2, and 7.77, respectively.

In the above-described example, the evaluation value 1401 of object O003 with respect to cluster C001 is 13.8, as given by the product of the accuracy 1301 between object O003 and cluster C001, which is 0.46, and the quantity 901 of objects belonging to cluster C001, which is 30.

(2-2-9. Object Priority)

The object priority 1501 is the priority evaluated for each object. The later-described image priority 1601 is evaluated according to the object priority 1501. The object priority 1501 is generated by the object priority evaluation unit 214 and used by the image priority evaluation unit 215.

The object priority 1501 of an object is the total of the evaluation value 1401 for that object with respect to each cluster.

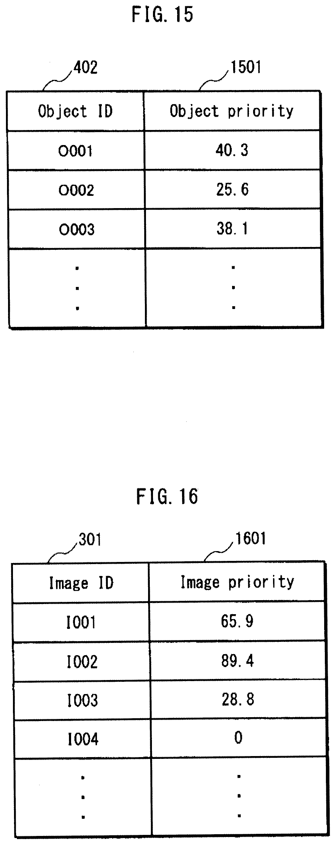

Fig. 15 illustrates the data configuration and a content example of the object priority 1501. The object priority 1501 is made up of a numerical value corresponding to each object ID 402.

In the example given in Fig. 15, the object priority 1501 of object O001, object O002, and object O003 is 40.3, 25.6, and 38.1, respectively.

In the above-described example, the evaluation value 1401 of object O001 with respect to cluster C001, which is 13.6, is summed with the evaluation value 1401 thereof with respect to cluster C002, which is 14.2, the evaluation value 1401 thereof with respect to cluster C003, which is 7.77, and the evaluation value 1401 thereof with respect to all other clusters to obtain a total of 40.3.

(2-2-10. Image Priority)

The image priority 1601 is the priority evaluated for each image. The image management device 100 ranks the images in the image group 300 according to the image priority 1601. The image priority 1601 is generated by the image priority evaluation unit 215 and used by the image ranking unit 216.

The image priority 1601 of an image is the total of the object priority 1501 of each object included therein.

Fig. 16 illustrates the data configuration and a content example of the image priority 1601. The image priority 1601 is made up of a value corresponding to the image ID 301 of each image.

In the example given in Fig. 16, the image priority 1601 of image 1001, image 1002, image 1003, and image 1004, is 65.9, 89.4, 28.8, and 0, respectively.

In the above-described example, the image priority 1601 of image 1001 is 65.9, found by adding the object priority 1501 of object O001, which is 40.3, to the object priority 1501 of object O002, which is 25.6.

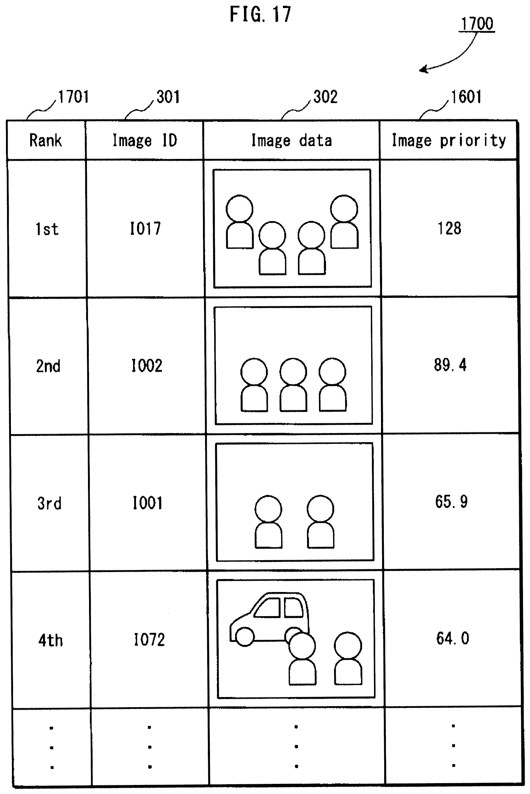

Fig. 17 illustrates the result of re-ordering the images in the image group 300 according to the image priority 1601. As shown, the ranking result 1700 has image 1017, which has an image priority of 128, ranked first, then has image 1002 ranked second, followed by image 1001 and image 1072.

(2-3. Operations)

The operations of the image management device 100 pertaining to the present invention are described below.

(2-3-1. Operations Outline)

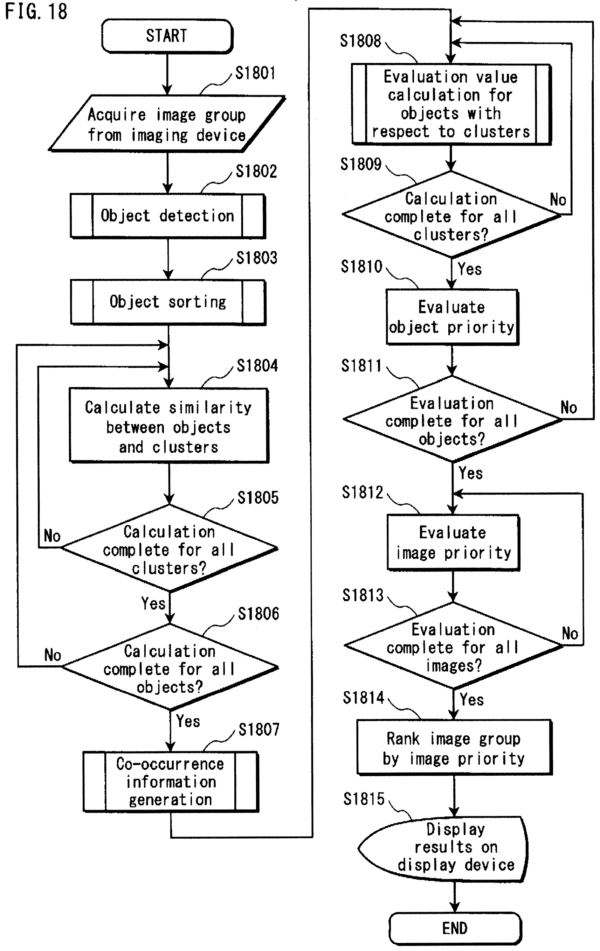

An outline of the operations performed by the image management device 100 is described using the flowchart depicted in Fig. 18.

First, the image acquisition unit 201 acquires the image group stored by the imaging device 110. Then, each image 302 in the image group 300 so acquired is stored in the image storage unit 202, along with an image ID 301 used for identification purposes (S1801).

Next, the object detection unit 203 extracts object features 601 from each image stored in the image storage unit 202, thereby detecting objects (S1802). The object detection unit 203 generates object occurrence information 500 for each image and stores the generated information in the object occurrence information storage unit 205. Then, the object feature 601 of each detected object is stored in the object feature storage unit 206 in association with an object ID 402. The object detection process will be explained in detail later.

Next, the object sorting unit 207 sorts all of the objects detected by the object detection unit 203 into relevant clusters according to the object feature 601 of each object, as stored in the object feature storage unit 206 (S1803). The object sorting unit 207 also calculates cluster features 702, representing each of the clusters. The resulting cluster sorting information 900 is stored in the cluster sorting information storage unit 209. Also, the cluster features 702 are stored in the cluster feature storage unit 208. The object sorting process is explained in detail later.

Next, the similarity calculation unit 211 calculates a similarity 1201 between each object and the relevant cluster according to the respective object features 601 stored in the object feature storage unit 206 and the respective cluster features 702 stored in the cluster sorting information storage unit 209 (S1804-S1806).

Subsequently, the co-occurrence information generation unit 210 generates co-occurrence information 1100 for all clusters by detecting co-occurrence relationships and states of non-cooccurrence in the image group 300 according to the object occurrence information 500 stored in the object occurrence information storage unit 205 and the cluster sorting information 900 stored in the cluster sorting information storage unit 209 (S1807). The co-occurrence information 1100 generation process will be explained in detail later.

Then, the accuracy calculation unit 212 calculates an accuracy 1301 for each object with respect to the relevant cluster according to the similarity 1201 calculated by the similarity calculation unit 211 and the co-occurrence information 1100 generated by the co-occurrence information generation unit 210 (S1808). Afterward, the evaluation value calculation unit 213 calculates an evaluation value 1401 for each object with respect to each cluster according to the accuracy 1301 calculated by the accuracy calculation unit 212 and the cluster sorting information 900 stored in the cluster sorting information storage unit 209 (S1809). The calculation methods for the accuracy 1301 and for the evaluation value 1401 will be explained in detail later.

Then, the object priority evaluation unit 214 evaluates an object priority 1501 for each object, according to the evaluation value 1401 calculated by the evaluation value calculation unit 213 (S1810-S1811). Here, the object priority 1501 evaluates the object priority by summing the evaluation value 1401 of all clusters having objects in the target image.

Next, the image priority evaluation unit 215 evaluates an image priority 1601 for each image according to the object priority 1501 evaluated by the object priority evaluation unit 214 and the object occurrence information 500 stored in the object occurrence information storage unit 205 (S1812-S1813). Here, the image priority 1601 of each image is the sum of the object priority 1501 of all objects included in the image. When no objects are included in an image, then the image priority 1601 of that image is 0.

Next, the image ranking unit 216 ranks the image group 300 according to the image priority 1601 evaluated by the image priority evaluation unit 215 (S1814). Here, the image priority 1601 value of each image is used for re-ordering in decreasing priority order.

Finally, the image output unit 217 outputs the result of ranking by the image ranking unit (S1815). The image group 300 stored in the image storage unit 202 is reordered according to the order of sorting found by the image ranking unit 216 and any operations received by the control input unit 218 for display by the display device 120.

(2-3-2. Object Detection Process)

The following describes the object detection process (S1802) performed by the object detection unit 203.

First, the object detection unit 203 extracts features from the target image in which objects are being detected. The features are extracted from the image by using a Gabor filter, for features such as the periodicity and direction of pixel value distributions in the image data.

Next, the object detection unit 203 cross-references the features so extracted with the template stored in the template storage unit 204 to detect objects. Here, an object is detected when the detected features fit a pattern of features within the template.

An object ID 402 consisting of a number assigned sequentially, starting at 1, as the object detection unit 203 detects objects with the letter O added as a prefix thereto is assigned to each detected object.

Then, the object detection unit 203 stores the image ID 301 of the object detection target image and the object ID 402 of any objects detected in that image in combination as object occurrence information 500 in the object occurrence information storage unit 205. Also, the feature detected in the area 401 in which an object has been detected isassociated with the object ID 402 and stored as the object feature 601 in the object feature storage unit 206.

Fig. 4 illustrates an example of objects as detected in images. In this example, objects O001 and O002 have been detected in image 302a, objects O003, O004, and O005 have been detected in image 302b, and object O006 has been detected in image 302c, while no objects have been detected in image 302d.

In the above example, the object detection unit 203 extracts the features from the image 302a. Given that the features detected in areas 401a and 401b of image 1001, which corresponds to image 302a, satisfy the criteria defined by the template stored in the template storage unit 204, objects are detected in areas 401a and 401b.

The object detection unit 203 assigns object IDs of O001 and O002 to the objects detected in areas 401a and 401b, respectively.

Then, as shown in Fig. 5, the object detection unit 203 stores the object occurrence information 500 in the object occurrence information storage unit 205. Also, as shown in Fig. 6, the object features 601 are stored in the object feature storage unit 206.

(2-3-3. Object Sorting Process)

The following describes the object sorting process (S1803) performed by the object sorting unit 207.

The object sorting unit 207 sorts all of the objects detected by the object detection unit 203 according to the object features 601 thereof, as stored in the object feature storage unit 206.

The objects are sorted into clusters using the k-means clustering method. The k-means clustering method involves automatically generating clusters to sort objects. According to this method, a cluster feature 702 that is representative of the cluster is automatically calculated. Objects are then sorted into the cluster having a cluster feature 702 most similar to the mean of the object features 601 therein.

Fig. 7 illustrates sorting via the k-means method. Here, 601a through 601i are object features 601 located in feature space 700 at positions corresponding to the objects. Also, 701a through 701c are the clusters generated via the k-means method, while 702a through 702c are arranged to represent the cluster features 702.

As shown, the object features 601 of objects O001, O003, and O006 are most similar to the cluster feature 702a of cluster C001. Thus, the object sorting unit 207 sorts the three objects into cluster 701a. Similarly, the object sorting unit 207 sorts objects O002, O004, and O007, into cluster 701b, and sorts objects O005, O008, and O009 into cluster 701c.

The object sorting unit 207 then assigns a cluster ID 703 consisting of a number assigned sequentially, starting at 1, with the letter C added as a prefixed thereto, to each of the clusters generated via the k-means method, i.e. 701a through 701c.

The resulting cluster sorting information 900 is stored in the cluster sorting information storage unit 209. Fig. 9 shows an example of the cluster sorting information 900 obtained as a result of sorting all of the objects into clusters.

In addition, the cluster feature 702 of a cluster is calculated by taking the arithmetic mean of the object features 601 of all objects included in the cluster. The cluster features 702 are stored in the cluster feature storage unit 208. Fig. 7 shows an example of the cluster features 702.

(2-3-4. Co-occurrence Information Generation Process)

The following describes the co-occurrence information 1100 generation process (S1807) performed by the co-occurrence information generation unit 210 on the image group 300.

The co-occurrence information generation unit 210 generates co-occurrence information 1100 for all detected clusters, using the co-occurrence relationships and states of non-cooccurrence of clusters for all images in the image group 300. The process of updating the co-occurrence information 1100 by detecting co-occurrence relationships and states of non-cooccurrence in a single image is termed the co-occurrence relationship detection process.

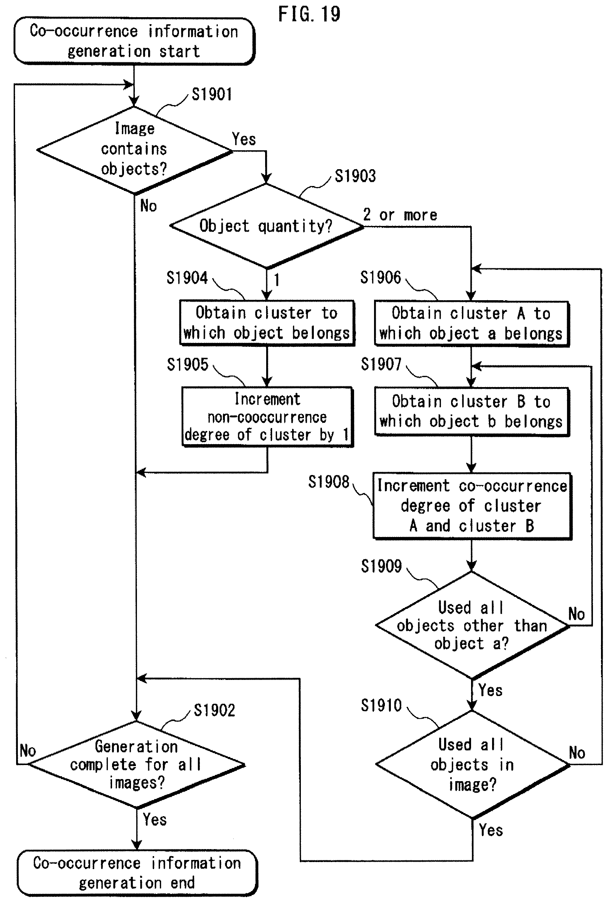

Fig. 19 is a flowchart of the process by which the co-occurrence information generation unit 210 generates the co-occurrence information 1100, showing the details of step S1807. Before the co-occurrence information 1100 generation process, the co-occurrence degree 1101 and the non-cooccurrence degree 1102 are initialized at a value of 0.

First, the object occurrence information 500 stored in the object occurrence information storage unit 205 is used to determine whether or not a single image k in the image group 300 includes any objects (S1901).

If any objects are found to be included, then the later-described co-occurrence relationship detection process is performed on image k. Conversely, if no objects are included, the co-occurrence relationship detection process for image k ends without any processing having been performed thereon.

Once the co-occurrence relationship detection process for image k has ended, a determination is made as to whether any images remain for which the co-occurrence relationship detection process has not yet been performed (S1902). If the determination is affirmative, then one of the detected images is made into the next image k, and the process returns to S1901. If the determination is negative, then the co-occurrence information generation unit 210 concludes the co-occurrence information 1100 generation process for the image group 300.

The co-occurrence relationship detection process for image k proceeds as follows.

First, the quantity of objects included in image k is sought from the object occurrence information 500. At this point, the process branches depending on whether or not the quantity of objects is greater than 1 (S1903).

If the quantity of objects is 1, then given that object a is the only object included in the image, cluster A to which object a belongs is in a state of non-cooccurrence for image k. In this case, cluster A, to which object a belongs, is obtained from the cluster sorting information 900 stored in the cluster sorting information storage unit 209 (S1904). Thus, a state of non-cooccurrence is detected from object a, and the non-cooccurrence degree 1102 of cluster A is incremented by 1 (S1905). This concludes the co-occurrence relationship detection process for image k.

If the quantity of objects is two or greater, then a co-occurrence relationship exists between each of the clusters to which the objects belong. For instance, image I001 includes object O001, which belongs to cluster C001, and object O002, which belongs to cluster C002. Therefore, for image I001, co-occurrence relationships exist for cluster C001 with respect to cluster C002 and for cluster C002 with respect to cluster C001.

The following co-occurrence relationship detection process is performed when the quantity of objects is two or greater. However, when a co-occurrence relationship is detected for cluster A, to which object a belongs, with respect to cluster B, to which object b belongs, object a is considered the co-occurrence source object while object b is considered the co-occurrence target object of object a.

First, an object a that has not yet been used as the co-occurrence source object is selected from among the objects included in image k. Then, cluster A, to which object a belongs, is obtained from the cluster sorting information 900 (S1906).

Next, an object b that is not object a and that has not yet been used as the co-occurrence target object for object a is selected from among the objects included in image k. Then, cluster B, to which object b belongs, is obtained from the cluster sorting information 900 (S1907). Thus, a co-occurrence relationship between co-occurrence source object a and co-occurrence target object b is detected, and the co-occurrence degree 1101 of cluster A with respect to cluster B is incremented by 1 (S1908). This concludes the usage of object b as the co-occurrence target object of object a.

Once again, an evaluation is performed to find an object within image k that has not yet been used as the co-occurrence target object for object a (S1909).

If any such objects are found, then one such object is made the new object b, and the process returns to S1907. If no such objects are found, then this concludes the usage of object a as the co-occurrence source object.

Once the usage of object a as the co-occurrence source object has concluded, a determination is made as to whether any objects remain in image k that have not yet been used as the co-occurrence source object (S1910). If any such objects are found, then one such object is made the new object a, and the process returns to S1906. If no such objects are found, then this concludes the co-occurrence relationship detection process for image k.

(2-3-5. Evaluation Value Calculation Process)

The following describes the evaluation value 1401 calculation process (S1808) performed by the evaluation value calculation unit 213.

The evaluation value calculation unit 213 calculates the evaluation value 1401 for a cluster of objects according to the accuracy 1301 calculated by the accuracy calculation unit 212 and the quantity 901 of objects belonging to the cluster as stored in the cluster sorting information storage unit 209.

To obtain the evaluation value 1401 for a cluster I to which an object j belongs, the evaluation value calculation unit 213 calculates the evaluation value 1401 by multiplying the accuracy 1301 calculated by the accuracy calculation unit 212 for object j of cluster I by the quantity 901 of objects belonging to cluster I as obtained from the cluster sorting information storage unit 209.

The method by which the accuracy calculation unit 212 calculates the accuracy 1301 for object j of cluster I will be described later.

(2-3-6. Accuracy Calculation Process)

The following describes the accuracy 1301 calculation process performed by the accuracy calculation unit 212.

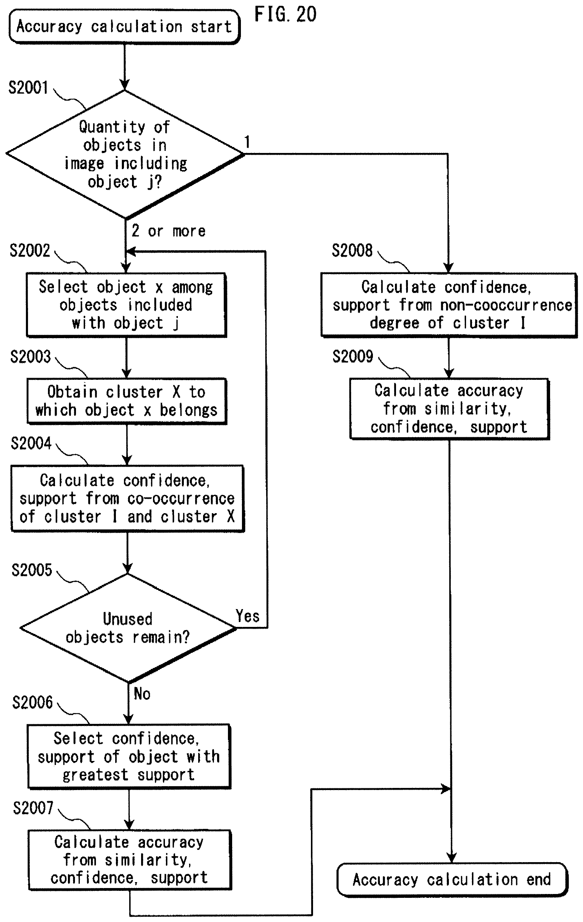

The accuracy calculation unit 212 calculates the accuracy 1301 of objects with respects to clusters. The operations of the accuracy calculation unit 212 calculating the accuracy 1301 for cluster I having object j which is included in image k are described using the flowchart of Fig. 20.

First, the quantity of objects present in image k, which includes object j, is sought from the object occurrence information 500 stored in the object occurrence information storage unit 205. The process then branches depending on whether or not more than one object is present (S2001). If the quantity of objects is 1, then the accuracy 1301 is calculated from the non-cooccurrence degree 1102. If the quantity of objects is two or greater, then the accuracy 1301 is calculated from the co-occurrence degree 1101.

The accuracy 1301 calculation process based on the non-cooccurrence degree 1102 is as follows.

Let the quantity of objects present in image k, which includes object j, be 1. Here, the accuracy calculation unit 212 calculates the accuracy 1301 from a confidence factor and a support factor for object j with respect to cluster I, both calculated using the non-cooccurrence degree 1102 of cluster I, and from the similarity 1201 of object j to cluster I calculated by the similarity calculation unit 211.

The confidence factor and the support factor are indices used in data mining technology that indicate the strength of a correlation between antecedent m and consequent n. The confidence factor indicates the proportion of cases in which consequent n occurs when antecedent m has occurred. The support factor indicates the proportion of occurrences in which antecedent m and consequent n occur together. Large values for the confidence factor and the support factor signify that, when antecedent m occurs, there is a high probability of consequent n also occurring.

When calculating the accuracy 1301 from the non-cooccurrence degree 1102, antecedent m is the phenomenon of an object belonging to cluster I being included in an image, and consequent n is the phenomenon of the object included in cluster I being in a state of non-cooccurrence

Given antecedent m and consequent n as described above, the confidence factor and the support factor calculated for a single cluster I are a non-cooccurrence confidence factor 2102 and a non-cooccurrence support factor 2202, respectively, for cluster I. In other words, to calculate the accuracy 1301 from the non-cooccurrence degree 1102, the confidence factor for object j of cluster I is the non-cooccurrence confidence factor 2102 for cluster I, and the support factor for object j of cluster I is the non-cooccurrence support factor 2202 for cluster I.

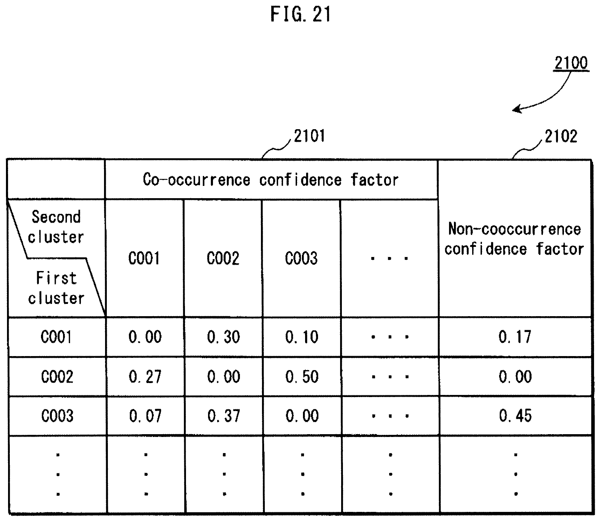

Fig. 21 illustrates the data configuration and a content example of a confidence factor 2100. The confidence factor 2100 is made up of a later-described co-occurrence confidence factor 2101 and the above-described non-cooccurrence confidence factor 2102.

As shown, the non-cooccurrence confidence factor 2102 for cluster C001 is 0.17. This signifies that, when the phenomenon of an object belonging to cluster C001 being included in a given image has occurred, the phenomenon of the object being in a state of non-cooccurrence within the given image occurs with a probability of 17%.

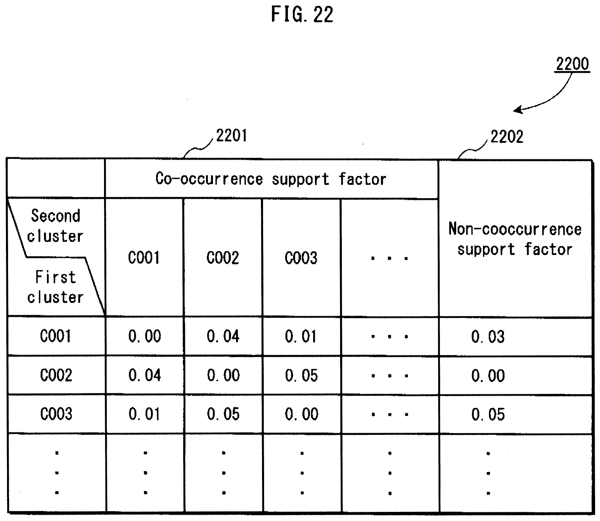

Fig. 22 illustrates the data configuration and a content example of a support factor 2200. The support factor 2200 is made up of a later-described co-occurrence support factor 2201 and of the above-described non-cooccurrence support factor 2202.

As shown, the non-cooccurrence support factor 2202 for cluster C001 is 0.03. This signifies that, for a single selected object, the phenomenon of that object belonging to cluster C001 and also being in a state of non-cooccurrence for the image occurs with a probability of 3%.

The calculation process begins by calculating the non-cooccurrence confidence factor 2102 and the non-cooccurrence support factor 2202 for object j of cluster I using the non-cooccurrence degree 1102 for cluster I (S2008).

Here, the non-cooccurrence confidence factor 2102 is calculated by dividing the non-cooccurrence degree 1102 of cluster I by the quantity 901 of objects belonging to cluster I. Similarly, the non-cooccurrence support factor 2202 is calculated by dividing the non-cooccurrence degree 1102 for cluster I by the total quantity of objects.

As such, the non-cooccurrence confidence factor 2102 and the non-cooccurrence support factor 2202 for cluster I, as well as the similarity 1201 of object j to cluster I as calculated by the similarity calculation unit 211, are substituted into the accuracy 1301 calculation formula. The accuracy 1301 is thus calculated (S2009).

The formula for calculating the accuracy 1301 is a logistic regression defining coefficients by performing logistic regression analysis in advance, based on statistics pertaining to cases where a single object exists alone in an image.

Logistic regression analysis is similar to multiple regression analysis. Relationships between explanatory variables and response variables are drawn in advance from training data, such that the response variable can be estimated given a random explanatory variable. Here, the explanatory variables are the similarity 1201, the confidence, and the support factors for object j with respect to cluster I, while the response variable is the accuracy 1301 at which object j is in cluster I. The greater the influence of the explanatory variable on the accuracy calculation, the larger the coefficient becomes.

This concludes the calculation of the accuracy 1301 from the non-cooccurrence degree 1102.

The accuracy 1301 calculation process based on the co-occurrence degree 1101 is as follows.

Let the quantity of objects present in image k, which includes object j, be two or greater. Here, the accuracy calculation unit 212 calculates the accuracy 1301 from the similarity 1201 of object j to cluster I as calculated by the similarity calculation unit 211, and from a confidence factor and a support factor for object j with respect to cluster I, both calculated using the co-occurrence degree 1101 of a cluster X to which an object x belongs, object x being an object that is not object j and that is also present in image k.

First, object x is selected from among all objects included in image k, such that object x is not object j and has not yet been used in the accuracy 1301 calculation process for object j of cluster I (S2002).

Cluster X, to which the selected object x belongs, is obtained from the cluster sorting information 900 stored in the cluster sorting information storage unit 209 (S2003). Then, the later described co-occurrence confidence factor 2101 and co-occurrence support factor 2201 of cluster I with respect to cluster X are calculated using the co-occurrence degree 1101 of cluster I with respect to cluster X (S2004).

Here, the co-occurrence confidence factor 2101 of cluster I with respect to cluster X is calculated by dividing the co-occurrence degree 1101 of cluster I with respect to cluster X by the quantity 901 of objects belonging to cluster X. Similarly, the co-occurrence support factor 2201 is calculated by dividing the co-occurrence degree 1101 for cluster I with respect to cluster X by the total quantity of objects.

As such, the co-occurrence confidence factor 2101 and the co-occurrence support factor 2201 calculated for cluster I with respect to cluster X, to which object x belongs, are the co-occurrence confidence factor and the co-occurrence support factor, respectively, for object x with respect to object j of cluster I.

Once the co-occurrence confidence factor and the co-occurrence support factor for object x with respect to object j of cluster I have been calculated, the usage of object x in the accuracy 1301 calculation process for object of cluster I is concluded.

Next, a determination is made as to whether any objects remain in image k that have not yet been used in the accuracy 1301 calculation process for object j of cluster I (S2005).

In the affirmative case, the process returns to S2002. In the negative case, the co-occurrence confidence factor and the co-occurrence support factor of an object included in image k that is not object j and that has the highest co-occurrence support factor are used as the confidence factor and the support factor of object j with respect to cluster I (S2006).

As such, the confidence factor and the support factor, as well as the similarity 1201 as calculated by the similarity calculation unit 211, for object j with respect to cluster I are substituted into the accuracy 1301 calculation formula. The ac curacy 1301 is thus calculated (S2007).

The formula for calculating the accuracy 1301 is a logistic regression defining coefficients by performing logistic regression analysis in advance, based on statistics pertaining to cases where multiple objects exist in an image. The greater the influence of the explanatory variable on the accuracy calculation, the larger the coefficient becomes.

The co-occurrence confidence factor 2101 and the co-occurrence support factor 2201 of cluster I with respect to cluster X are the confidence and support factors for the consequent that a object belonging to cluster I is included in a particular image, given the antecedent that an object belonging to cluster X is included in the particular image.

In the example from Fig. 21, the co-occurrence confidence factor 2101 for cluster C001 with respect to cluster C002 is 0.30. This signifies that, when the phenomenon of an object belonging to cluster C002 being included in a given image has occurred, the phenomenon of an object belonging to cluster C001 also being included within the given image occurs with a probability of 30%.

In the example from Fig. 22, the co-occurrence support factor 2201 for cluster C001 with respect to cluster C002 is 0.04. This signifies that, for a single selected object, the phenomenon of the selected object belonging to cluster C002 and also being included in an image that also includes an object belonging to cluster C001 occurs with a probability of 4%.

(2-4. Advantageous Effects of Embodiment 1)

The image management device 100 pertaining to Embodiment 1 calculates an object priority, i.e., the priority of a human face that is an object included in an image, from an occurrence frequency of an object belonging to a cluster that represents the person whose face is included in the image. The image management device 100 then calculates the image priority from the object priority so calculated, and ranks the image according to the resulting image priority. Thus, an image in which a frequently-occurring person is included has a higher rank. A user can be expected to keep several images showing a person of particular interest. Consequently, the user can more easily search an enormous number of images to find images in which such a person appears by searching through higher-ranked images, i.e., images having a high priority.

The object priority is evaluated using the quantity of objects belonging to nearby clusters having a strong similarity to an object. As such, even if the object is mistakenly sorted into a different cluster than other objects representing the same person, the evaluated object priority nevertheless remains near that obtained when the object is correctly identified as showing the person of interest.

Furthermore, the object priority may plausibly be evaluated as being low, despite representing a certain person, when the probability of a person being the certain person is calculated as being low from the similarity of the object features taken alone. However, the probability of the person being the certain person is calculated not only from the similarity of the object features but also from the co-occurrence relationship between persons. Therefore, even if the person is deemed likely to be someone else based on the object features alone, the object priority nevertheless remains near the result expected when the object is correctly identified as being the certain person.

(3. Embodiment 2)

An image management device 2300 serving as Embodiment 2 of the present invention is described below. Embodiment 2 differs from Embodiment 1 in that the accuracy 1301 calculation using co-occurrence relationships between clusters to which objects representing human faces belong is replaced by an accuracy 1301 calculation method that uses co-occurrence relationships between human faces and non-human entities.

Here, an entity is a predetermined object that is not a human face, being detected by a later-described entity unit. Entities are hereinafter referred to as co-occurring entities so as to maintain a distinction from the more general sense of this term. A co-occurring entity may be a vehicle, an animal, a plant, a building, or anything else.

The co-occurring entities are used for the co-occurrence information in the accuracy 1301 calculation process only, and are not considered as having intrinsic priority.

(3-1. Outline)

The hardware configuration of the variant image management device 2300 is similar to that of the image management device 100 of Embodiment 1.

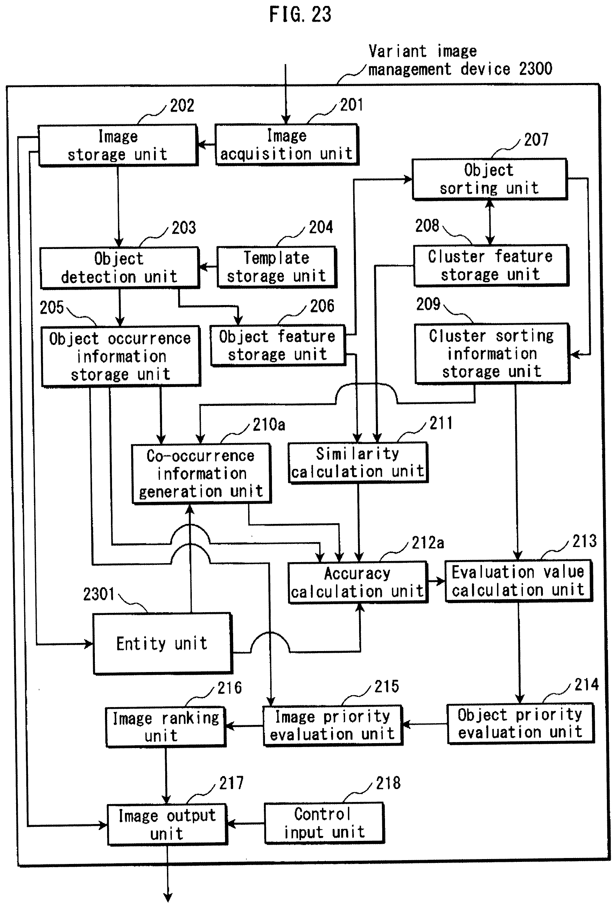

Fig. 23 shows the overall functional configuration of the variant image management device 2300. However, although peripheral devices are omitted, the reference numbers from Fig. 2 are used for functional blocks having the same function as the image management device 100.

The points of difference of the variant image management device 2300 from the image management device 100 are the addition of an entity unit 2301 that detects and sorts entities, and the replacement of the co-occurrence information generation unit 210 and the accuracy calculation unit 212 with a co-occurrence information generation unit 210a and an accuracy calculation unit 212a, respectively. The following explanations center on these points of difference from the image management device 100.

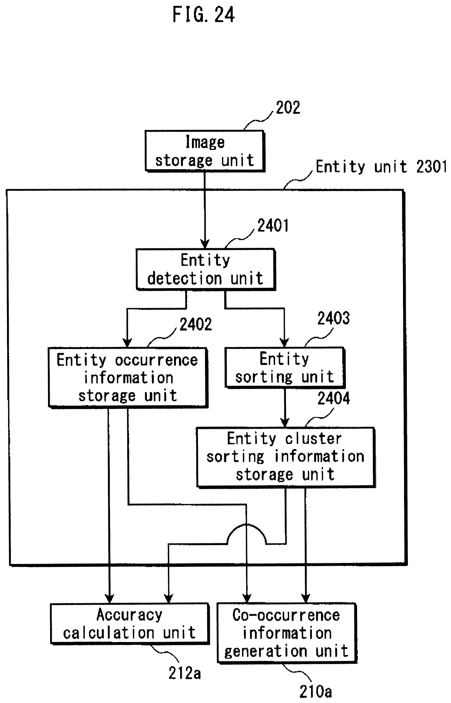

Fig. 24 is a block diagram showing the detailed configuration of the entity unit 2301. The entity unit 2301 includes an entity detection unit 2401, an entity occurrence information storage unit 2402, an entity sorting unit 2403, and an entity cluster sorting information storage unit 2404.

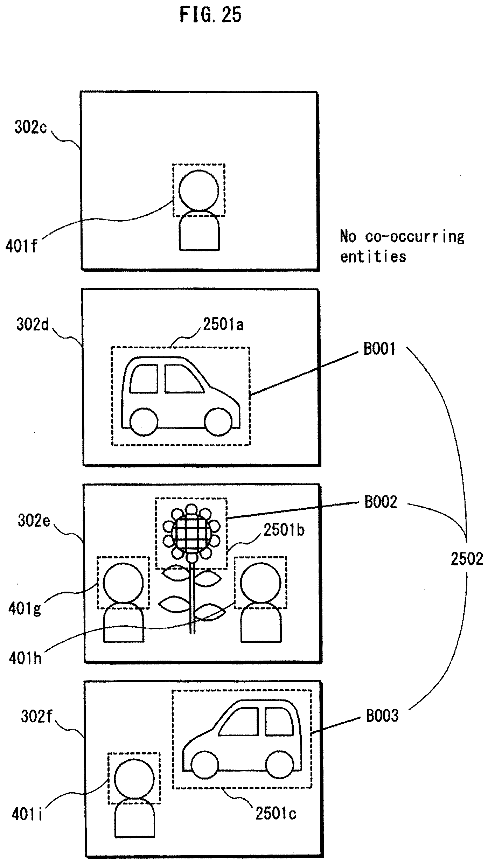

The entity detection unit 2401 extracts entity feature amounts (also termed entity features), which are the features of a co-occurring entity, to detect co-occurring entities in each image of the image group 300 stored in the image storage unit 202 according to predetermined conditions, and assigns an entity ID 2502 to each co-occurring entity so detected for identification purposes. The functions of the entity detection unit 2401 are realized by, for example, having the processor execute programs stored in memory. Fig. 25 illustrates an example of co-occurring entities as detected in images. Fig. 25 will be explained in detail later. Furthermore, the entity detection unit 2401 stores the image ID 301 of each image in association with the entity ID 2502 of any co-occurring entities detected therein as entity occurrence information 2600 in the entity occurrence information storage unit 2402.

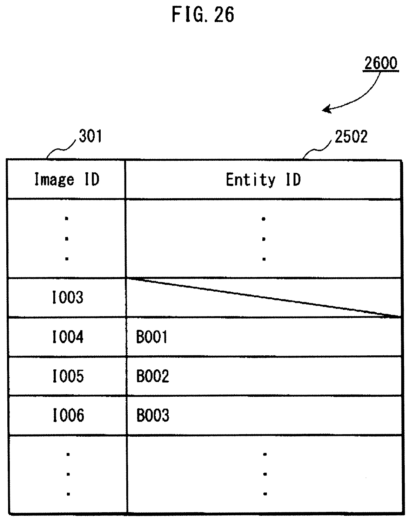

The entity occurrence information storage unit 2402 stores entity occurrence information 2600 for each image. The entity occurrence information storage unit 2402 may be realized as memory, for example. Fig. 26 illustrates an example of the entity occurrence information 2600 as stored in the entity occurrence information storage unit 2402. Fig. 26 will be explained in detail later.

The entity sorting unit 2403 sorts the entities detected by the entity detection unit 2401 into entity clusters according to the entity features detected by the entity detection unit 2401. The functions of the entity sorting unit 2403 are realized by, for example, having the processor execute programs stored in memory. In addition, the entity sorting unit 2403 assigns an entity cluster ID 2701 to each entity cluster for identification purpose, and stores the entity cluster ID 2701 of each cluster in association with the entity ID of the co-occurring entities and the quantity of entities sorted into that cluster as entity cluster sorting information 2700 in the entity cluster sorting information storage unit 2404.

An entity cluster is a sorting unit into which co-occurring entities are sorted according to predetermined criteria. Each entity cluster corresponds to a different range of entity features.

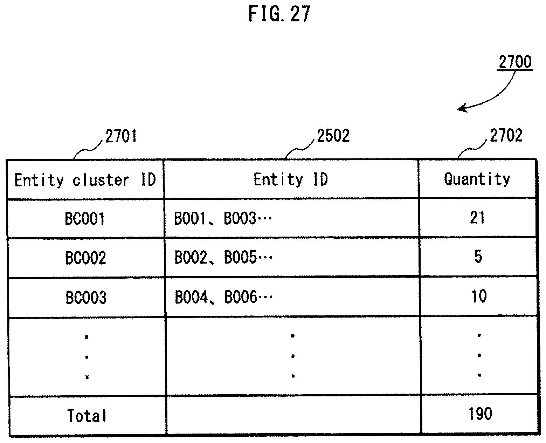

The entity cluster sorting information storage unit 2404 stores the entity cluster sorting information 2700 for each cluster. The entity cluster sorting information storage unit 2404 may be realized as memory, for example. Fig. 27 illustrates an example of entity cluster sorting information 2700 as stored in the entity cluster sorting information storage unit 2404. Fig. 27 will be explained in detail later.

(3-2. Data)

(3-2-1. Entity Occurrence Information)

The entity occurrence information 2600 is information indicating which of the co-occurring entities have been detected in each of the images. The entity occurrence information 2600 is generated by the entity detection unit 2401 and stored in the entity occurrence information storage unit 2402 for use by the co-occurrence information generation unit 210a and the accuracy calculation unit 212a.

Fig. 25 illustrates an example of areas 2501, in each of which the entity detection unit 2401 has detected a co-occurring entity, and the entity ID 2502 of each co-occurring entity detected in the areas 2501. Fig. 26 illustrates an example of the data structure of the entity occurrence information 2600 with content corresponding to Fig. 25.

As shown in Fig. 26, the entity occurrence information 2600 is a table in which the image ID 301 and the entity ID identifying each detected co-occurring entity are listed for each image. Some images have only one co-occurring entity detected therein, while others have several, and yet others have none at all.

The entity IDs 2502 are IDs uniquely identifying each of the co-occurring entities within the variant image management device 2300, assigned by the entity detection unit 2401 so as to correspond one-to-one with the co-occurring entities. The entity ID 2502 is generated by the entity detection unit 2401. For example, the entity ID 2502 may consist of a number assigned sequentially, starting at 1, as the entity detection unit 2401 detects entities, with the letter B added as a prefix thereto.

In the example of Fig. 25, the entity IDs 2502 assigned to the detected co-occurring entities are B001 for the entity detected in area 2501a, B002 for the entity detected in area 2501b, and B003 for the entity detected in area 2501c.

When the co-occurring entities given in Fig. 25 are used below to describe a specific example, the entity ID 2502 assigned thereto is used for reference. For example, the co-occurring entity with the entity ID 2502 of B001 is referred to as co-occurring entity B001.

By using the entity occurrence information 2600, the entity ID 2502 of a given co-occurring entity included in a specific image can be obtained. Conversely, the image ID 301 of an image that includes a specific co-occurring entity can also be obtained.

In the example shown in Fig. 26, image I003 includes no co-occurring entities, while image 1004 includes co-occurring entity B001. Also, image I004 is clearly the image that includes co-occurring entity B002.

(3-2-3. Entity Feature Amounts)

Entity feature amounts, also termed entity features, are feature amounts pertaining to entities. For example, an entity feature may be a vector made up of components taken from several values that indicate image features. For the example of a vehicle, the feature amounts may the diameter and the center of a circle, where the circle is traced by pixel values recognized as wheels (e.g., pixel values representing black) and arranged to form the circle. Thus, the entity feature of a vehicle may be a vector with components being the wheel features, window features, and so on.

The entity features are generated by the entity detection unit 2401 and used by the entity sorting unit 2403.

(3-2-3. Entity Clusters)

Entity cluster-related data, i.e., the entity cluster ID 2701 and the entity cluster sorting information 2700, are explained below.

The entity cluster IDs 2701 uniquely identify each of the entity clusters within the variant image management device 2300, being assigned by the entity sorting unit 2403 so as to be in one-to-one correspondence with the entity clusters. The entity cluster ID 2701 is generated by the entity sorting unit 2403. For example, the entity cluster ID 2701 may consist of a number assigned sequentially, starting at 1, as the entity sorting unit 2403 generates the clusters, with the letters BC added as a prefix thereto.

The entity cluster sorting information 2700 is information indicating which of the co-occurring entities have been sorted into each of the clusters by the entity sorting unit 2403. The entity cluster sorting information 2700 is generated by the entity sorting unit 2403, and then stored in the entity cluster sorting information storage unit 2404 for use by the co-occurrence information generation unit 210a and the evaluation value calculation unit 213a.

Fig. 27 illustrates an example of the data configuration of the entity cluster sorting information 2700, where the content of the entity cluster sorting information 2700 is the result of sorting the co-occurring entities from Fig. 25. The entity cluster sorting information 2700 includes, for each entity cluster, the entity cluster ID 2701, the entity ID 2502 of each co-occurring entity belonging to the entity cluster, and the quantity 2702 of co-occurring entities belonging to the entity cluster.

When the entity clusters given in Fig. 27 are used below to describe a specific example, the entity cluster ID 2701 assigned thereto is used for reference. For example, the entity cluster with the entity cluster ID 2701 of BC001 is referred to as entity cluster BC001.

In the example of Fig. 27, the entity cluster sorting information 2700 of entity cluster BC001 indicates that entities B001 and B003 belong thereto, and that the quantity 2702 of co-occurring entities belonging to entity cluster BC001 is 21 in total.

(3-2-4. Co-occurrence Information)

The co-occurrence information 2800 used in Embodiment 2 is information indicating the relationships existing between clusters and entity clusters.

First, co-occurrence is explained, followed by the details of the co-occurrence information 2800.

In Embodiment 2, cluster A and entity cluster B are said to be co-occurring when the phenomena of an object belonging to cluster A being included and of a co-occurring entity belonging to entity cluster B being included occur in a single image. That is, cluster A and entity cluster B are co-occurring when a single image includes an object belonging to cluster A and a co-occurring entity belonging to entity cluster B.

Furthermore, a co-occurrence relationship is said to exist between cluster A and entity cluster B when the two are co-occurring. To be precise, the co-occurrence relationship between cluster A and entity cluster B exists if the phenomenon of a co-occurring entity belonging to entity cluster B being included occurs in the presence of the phenomenon of an object belonging to cluster A being included.

The co-occurrence information 2800 is information pertaining to the co-occurrence relationships between clusters and entity clusters, generated by the co-occurrence information generation unit 210a for use by the accuracy calculation unit 212a.

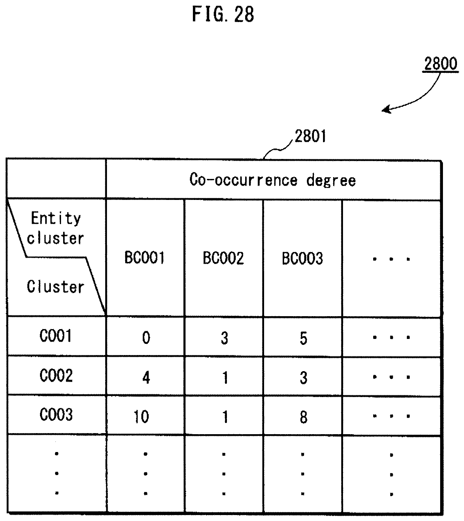

Fig. 28 illustrates the data configuration and a content example of the co-occurrence information 2800. The co-occurrence information 2800 is made up of a co-occurrence degree 2801, indicating the degree to which a co-occurrence relationship from a particular cluster to an entity cluster exists for each image in the image group 300.

Here, the co-occurrence degree 2801 is the number of times a co-occurrence relationship is detected in the image group 300. The co-occurrence degree 2801 of cluster A to entity cluster B is thus the number of times a co-occurrence relationship is detected for cluster A with respect to entity cluster B in the image group 300.

In the example shown in Fig. 28, the co-occurrence degree 2801 of cluster C001 is 0 with respect to entity cluster BC001, 3 with respect to entity cluster BC002, and 5 with respect to entity cluster BC003.

In the previously-described example, the co-occurrence degree 2801 of cluster C001 with respect to entity cluster BC002 is 3. This indicates that, in all images in which an object belonging to cluster C001 is included, a co-occurring entity belonging to entity cluster BC002 is included on three occasions.

(3-3. Operations)

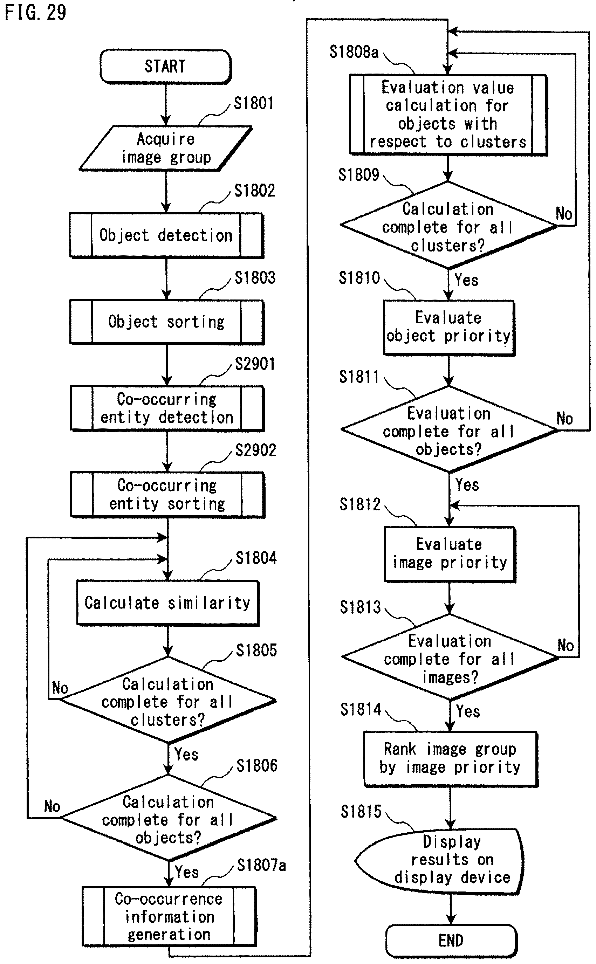

Fig. 29 is a flowchart showing the operations of the variant image management device 2300. Elements identical to the operations of the image management device 100 are assigned the reference numbers used in Fig. 18.

The operations of the variant image management device 2300 differ from those of the image management device 100 in that, for the former, a co-occurring entity detection process (S2901) and a co-occurring entity sorting process (S2902) have been added after the object sorting process (S1803), and the content of the co-occurrence information 2800 generation process (S1807) and of the evaluation value 1401 calculation process (S1808) have been modified (S1807a and S1808a).

The following describes the points of difference from the operations of the image management device 100, namely the co-occurring entity detection process (S2901), the co-occurring entity sorting process (S2902), the co-occurrence information generation process (S1807a), and the evaluation value 1401 calculation process (S1808a).

(3-3-1. Co-occurring Entity Detection Process)

The following describes the co-occurring entity detection process (S2901) performed by the entity detection unit 2401.

The entity detection unit 2401 begins by extracting the entity features from the target image in which co-occurring entities are being detected. The entity features are extracted from the image by using a Gabor filter to extract features such as the periodicity and direction of pixel value distributions in the image data, much like the object detection process.

Next, the entity detection unit 2401 references the template stored in the entity detection unit 2401 to detect the co-occurring entities. Here, a co-occurring entity is detected when the detected entity features fit a pattern of entity features within the template.

For example, the entity ID 2502 may consist of a number assigned sequentially, starting at 1, as the entity detection unit 2401 detects co-occurring entities, with the letter B added as a prefix thereto.

Then, the entity detection unit 2401 stores the image ID 301 of the target image for co-occurring entity detection and the entity ID 2502 of all co-occurring entities detected in that image in combination as entity occurrence information 2600 in the entity occurrence information storage unit 2402.

Fig. 25 illustrates an example of entities as detected in images. As shown, co-occurring entity B001 is detected in image 302d, co-occurring entity B002 is detected in image 302e, and co-occurring entity B003 is detected in image 302f, while no co-occurring entities are detected in image 302c.

In the above-described example, the entity detection unit 2401 extracts entity features from image 302d. Given that the entity features detected in area 2501a of image 1004, which corresponds to image 302d, satisfy the criteria defined by the template, a co-occurring entity is detected in area 2501a.

The co-occurring entity detected in area 2501a is assigned an entity ID 2502 of B001 by the entity detection unit 2401.

Then, as shown in Fig. 26, the entity detection unit 2401 stores the entity occurrence information 2600 in the entity occurrence information storage unit 2402.

(3-3-2. Co-occurring Entity Sorting Process)

The following describes the co-occurring entity sorting process (S2602) performed by the entity sorting unit 2403.

The entity sorting unit 2403 sorts all co-occurring entities detected by the entity detection unit 2401 into entity clusters, in accordance with the entity feature detected by the entity detection unit 2401 for each co-occurring entity.

The co-occurring entities are sorted into entity clusters according to a method that involves a SVM (Support Vector Machine), for example. An SVM performs sorting using pre-assigned training data.

The resulting entity cluster sorting information 2700 is stored in the entity cluster sorting information storage unit 2404. Fig. 27 illustrates an example of the entity cluster sorting information 2700 after all co-occurring entities have been sorted into entity clusters.

(3-3-3. Co-occurrence Information Generation Process)

The following describes the co-occurrence information 2800 generation process (S1807a) performed by the co-occurrence information generation unit 210a on the image group 300.

The co-occurrence information generation unit 210a generates the co-occurrence information 2800 for all clusters with respect to all entity clusters by detecting the co-occurrence relationships of the clusters in each image of the image group 300. The process of updating the co-occurrence information 2800 by detecting co-occurrence relationships within a single image is termed the co-occurrence relationship detection process.

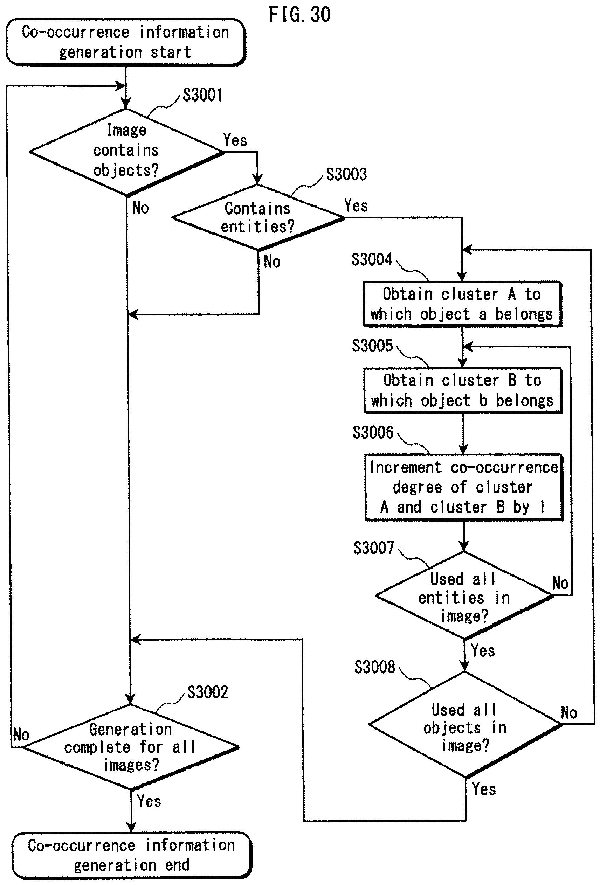

Fig. 30 is a flowchart of the process by which the co-occurrence information generation unit 210a generates the co-occurrence information 2800, showing the details of step S1807. Before the co-occurrence information 2800 generation process, the co-occurrence degree 2801 is initialized at a value of 0.

First, the object occurrence information 500 stored in the object occurrence information storage unit 205 is used to determine whether or not a single image k among the image group 300 includes any objects (S3001).

If objects are found to be included, then the later-described co-occurrence relationship detection process is performed on image k. Conversely, if no objects are included, the co-occurrence relationship detection process for image k ends without any processing having been performed.

Once the co-occurrence relationship detection process for image k has ended, a determination is made as to whether any images remain for which the co-occurrence relationship detection process has not yet been performed (S3002). If the determination is affirmative, then one of the images is made into the next image k, and the process returns to S3001. If the determination is negative, then the co-occurrence information generation unit 210a concludes the co-occurrence information 2800 generation process for the image group 300.

The co-occurrence relationship detection process for image k proceeds as follows.

First, a determination as to whether or not any co-occurring entities are included in image k is made using the entity occurrence information 2600 stored in the entity occurrence information storage unit 2402.

If no co-occurring entities are included, the co-occurrence relationship detection process for image k ends without any processing having been performed.

If co-occurring entities are included, then a co-occurrence relationship is said to exist for the clusters to which each of the objects belong with respect to the entity clusters to which the co-occurring entities belong.

For example, image 302f includes the object that was detected in area 401i (hereinafter, object O009) as well as entity B003. Therefore, one co-occurrence relationship exists for image 302f, for the cluster to which object O009 belongs with respect to the entity cluster to which entity B003 belongs.

The following co-occurrence relationship detection process is performed when an image includes an object and a co-occurring entity. Here, when a co-occurrence relationship is detected for cluster A, to which object a belongs, with respect to entity cluster B, to which co-occurring entity b belongs, object a is termed the co-occurrence source object and co-occurring entity b is termed the co-occurrence target entity of object a.

First, an object a that has not yet been used as the co-occurrence source object is selected from among the objects included in image k. Then, cluster A, to which object a belongs, is obtained from the cluster sorting information 900 stored in the cluster sorting information storage unit 209 (S3004).

Next, a co-occurring entity b that has not yet been used as the co-occurrence target entity for object a is selected among the co-occurring entities included in image k. Entity cluster B, to which co-occurring entity b belongs, is then obtained (S3005). Thus, a co-occurrence relationship for co-occurrence source object a with respect to co-occurrence target entity b is detected, and the co-occurrence degree 1101 of object A and object B is incremented by 1 (S3006). This concludes the use of co-occurring entity b as the co-occurrence target entity of object a.

Once again, a determination is made as to whether a co-occurring entity that has not yet been used as the co-occurrence target entity for object a exists within image k (S3007).

If the determination is affirmative, then one of the co-occurring entities is made into the next co-occurrence target entity b, and the process returns to S3005. If the determination is negative, then this concludes the usage of object a as the co-occurrence source object.

Once the usage of object a as the co-occurrence source object has concluded, a determination is made as to whether any objects remain in image k that have not yet been used as the co-occurrence source object (S3008). If any such objects are found, then one such object is made the new object a, and the process returns to S3004. If no such objects are found, then this concludes the co-occurrence relationship detection process for image k.

(3-3-4. Evaluation Value Calculation Process)

The following describes the evaluation value 1401 calculation process (S1808a) performed by the evaluation value calculation unit 213.

The evaluation value calculation unit 213 calculates the evaluation value 1401 for objects and clusters using the same method as described for Embodiment 1. However, the accuracy 1301 of objects with respect to clusters is instead calculated by the accuracy calculation unit 212a. The accuracy 1301 calculation process by the accuracy calculation unit 212a is described below.

(3-3-5. Accuracy Calculation Process)

The following describes the accuracy 1301 calculation process performed by the accuracy calculation unit 212a.

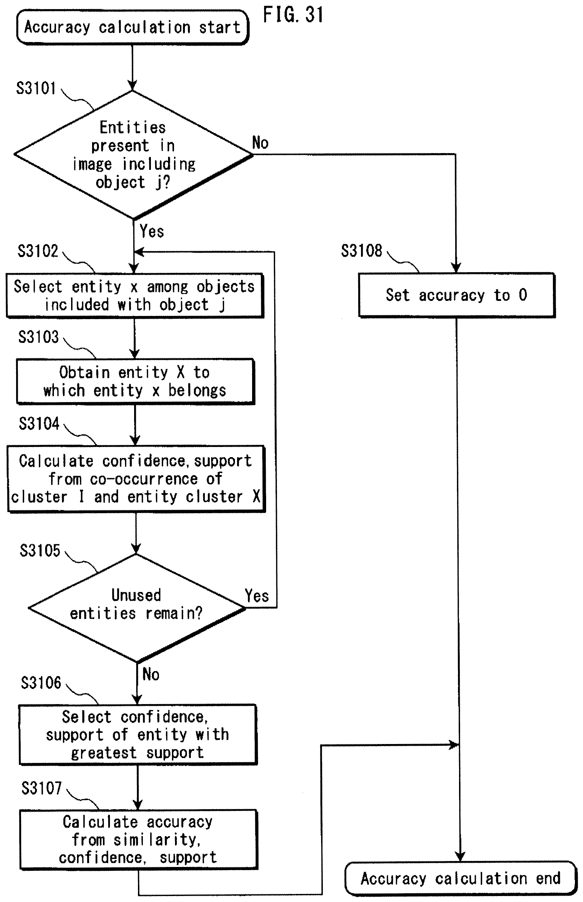

The accuracy calculation unit 212a calculates the accuracy 1301 for a cluster of objects. The operations of the accuracy calculation unit 212a calculating the accuracy 1301 for cluster I having object j which is included in image k are described using the flowchart of Fig. 31.

First, a determination as to whether or not any co-occurring entities are included in image k is made using the entity occurrence information 2600 stored in the entity occurrence information storage unit 2402 (S3101). If this determination is negative, then the accuracy 1301 for object j with respect to cluster I is 0 (S3108). If the determination is affirmative, then the accuracy 1301 is calculated using the co-occurrence degree 2801.

The accuracy 1301 calculation process based on the co-occurrence degree 2801 is as follows.

Let a co-occurring entity be included in image k, which includes object j. Here, the accuracy calculation unit 212a calculates the accuracy 1301 from a confidence factor and a support factor for object j with respect to cluster I, both calculated using the co-occurrence degree 2801 of a cluster X to which a co-occurring entity x belongs, co-occurring entity x being present in image k, and from the similarity 1201 of object j with respect to cluster I as calculated by the similarity calculation unit 211.

First, co-occurring entity x is selected from among all co-occurring entities included in image k, such that co-occurring entity x has not yet been used in the accuracy 1301 calculation process for object j with respect to cluster I (S3102).

Entity cluster X, to which the selected co-occurring entity x belongs, is obtained from the entity cluster sorting information 2700 stored in the entity cluster sorting information storage unit 2404 (S3103). Then, the later described co-occurrence confidence factor 3201 and co-occurrence support factor 3301 of cluster 1 with respect to entity cluster X are calculated using the co-occurrence degree 2801 of cluster I with respect to entity cluster X (S3104).

Here, the co-occurrence confidence factor 3201 of cluster I with respect to entity cluster X is calculated by dividing the co-occurrence degree 2801 of cluster I with respect to entity cluster X by the quantity 2702 of co-occurring entities belonging to entity cluster X. Similarly, the co-occurrence support factor 3301 is calculated by dividing the co-occurrence degree 2801 for cluster I with respect to entity cluster X by the total quantity of objects and co-occurring entities.

As such, the co-occurrence confidence factor 3201 and the co-occurrence support factor 3301 calculated for cluster I with respect to entity cluster X, to which co-occurring entity x belongs, are the co-occurrence confidence factor and the co-occurrence support factor, respectively, for co-occurring entity x with respect to object j of cluster I.

Once the co-occurrence confidence factor and the co-occurrence support factor for co-occurring entity x with respect to object j of cluster I have been calculated, the usage of co-occurring entity x in the accuracy 1301 calculation process for object j of cluster I is concluded.

Next, a determination is made as to whether any co-occurring entities remain in image k that have not yet been used in the accuracy 1301 calculation process for object j of cluster I (S3105).

In the affirmative case, the process returns to S3102. In the negative case, the co-occurrence confidence factor and the co-occurrence support factor of a co-occurring entity included in image and having the highest co-occurrence support factor are used as the confidence and support factors of object j with respect to cluster I (S3106).

As such, the confidence and the support factor, as well as the similarity 1201 as calculated by the similarity calculation unit 211 for object j with respect to cluster I, are substituted into the accuracy 1301 calculation formula. The ac curacy 1301 is thus calculated (S3107).

The formula for calculating the accuracy 1301 is a logistic regression defining coefficients by performing logistic regression analysis in advance, based on statistics pertaining to cases where an object and a co-occurring entity exist in an image. The greater the influence of the explanatory variable on the accuracy calculation, the larger the coefficient becomes.

The co-occurrence confidence factor 3201 and the co-occurrence support factor 3301 of cluster I with respect to entity cluster X are the confidence and support factors for the consequent that an object belonging to cluster I is included in a particular image, given the antecedent that a co-occurring entity belonging to entity cluster X is included in the particular image.

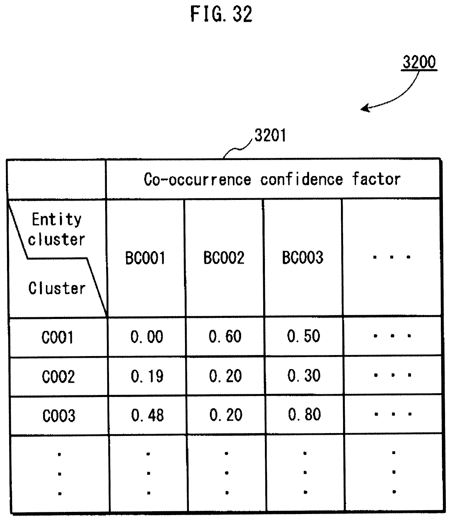

In the example from Fig. 32, the co-occurrence confidence factor 3201 for cluster C001 with respect to entity cluster BC002 is 0.60. This signifies that, when the phenomenon of a co-occurring entity belonging to cluster BC002 being included in a given image has occurred, the phenomenon of an object belonging to cluster C001 also being included within the given image occurs with a probability of 60%.

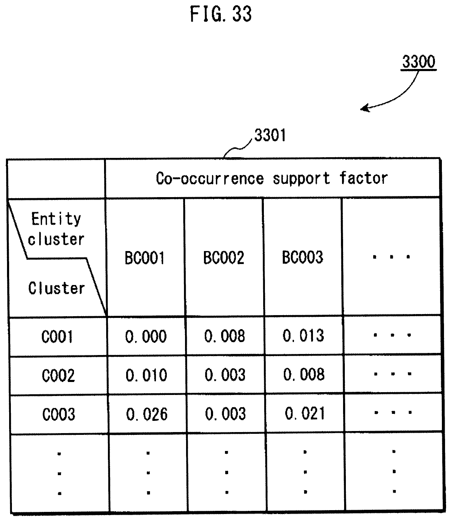

In the example from Fig. 33, the co-occurrence support factor 3301 for cluster C001 with respect to entity cluster BC002 is 0.008. This signifies that, for a single selected object or co-occurring entity, the phenomenon of that co-occurring entity belonging to entity cluster BC002 while being included in an image that also includes an object belonging to cluster C001 occurs with a probability of 0.8%.

(3-4. Advantageous Effects of Embodiment 2)

Much like the image management device 100, the variant image management device 2300 pertaining to Embodiment 2 enables a user to more easily search an enormous number of images to find images in which a person of interest appears.

Here, the method of evaluation uses co-occurrence relationships with entities that are not human beings. As such, given images in which human beings appear together with entities such as vehicles or buildings, the evaluated object priority more closely resembles correct identification of images as representing the same person.

(3-5. Variation (Combination of Embodiments 1 and 2))

An image management device is described below as a variation on Embodiment 2. Here, the accuracy 1301 calculation process that uses co-occurrence relationships between clusters, as in Embodiment 1, is added to the accuracy 1301 calculation process that uses co-occurrence relationships between clusters and entity clusters.

The image management device using this method is the above-described variant image management device 2300, modified through the addition of the co-occurrence information generation unit 210 of the image management device 100 pertaining to Embodiment 1 and the operations of the accuracy calculation unit 212a.

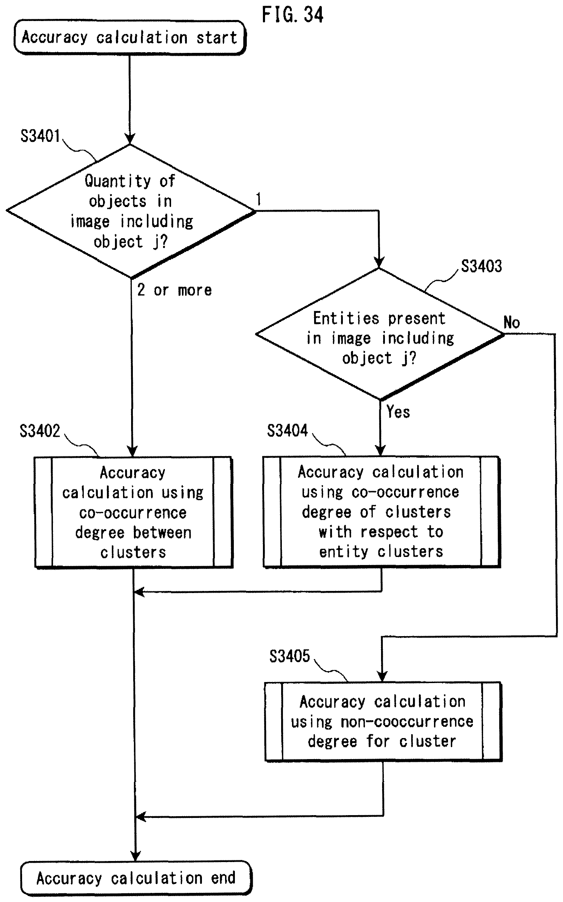

Fig. 34 is a flowchart of the variant accuracy 1301 calculation process for cluster I having object j which is included in image k performed by the accuracy calculation unit 212a.

First, the quantity of objects present in image k, which includes object j, is sought from the object occurrence information 500 stored in the object occurrence information storage unit 205. The process then branches depending on whether or not more than one object is present (S3401).

If two or more objects are present, then the accuracy 1301 is calculated according to the co-occurrence degree 1101 for cluster I with respect to any clusters to which other objects included in the image belong. This process is identical to steps S2002 through S2007 described for Embodiment 1.

If only one object is found, then a determination as to whether or not any co-occurring entities are included in image k is made using the entity occurrence information 2600 stored in the entity occurrence information storage unit 2402 (S3101).

If the determination is affirmative, then the accuracy 1301 is calculated using the co-occurrence degree 2801 for cluster 1 with respect to the entity clusters to which any co-occurring entities belong. This process is identical to steps S3004 through S3008 described for Embodiment 2.

If the determination is negative, then the accuracy 1301 is calculated using the non-cooccurrence degree 1102 for cluster 1. This process is identical to steps S2008 and S2009 described for Embodiment 1.

The image management device pertaining to the above-described variation evaluates the image priority using the co-occurrence relationships between human beings whenever possible. When no such co-occurrence relationships can be used, the image management device uses co-occurrence relationships with co-occurring entities, or the number of times a person appears alone, to evaluate the image priority.

(4. Embodiment 3)

Embodiment 3 of the present invention describes a variant image management device 3500 in which the accuracy 1301 calculation process using the similarity, confidence, and support factors as described in Embodiment 1 is modified so as to additionally use a cluster reliability factor. The cluster reliability factor, also termed reliability, indicates the extent to which the object features of all the objects in a cluster are collected in the cluster feature of that cluster. In other words, the reliability represents the overall size of the deviation between the object features of each object belonging to the cluster. For example, as shown in Fig. 7, the distance between the cluster feature 702a of cluster C001 and the object features 601a, 601c, and 601f of the objects included in cluster C001 represents the magnitude of the difference between the features thereof. That is, the shorter the distance between the cluster feature and the object feature of an object belonging to the cluster, the greater the extent to which the object feature of that object is collected in the cluster features. This indicates high reliability for that cluster.

When cluster reliability is high, i.e., when there is a high degree of feature collection, there is a high probability that the cluster is made up of objects all representing the same person. Also, the similarity and co-occurrence degree calculated from the cluster feature of such a cluster have high credibility. On the other hand, when cluster reliability is low, i.e., when there is a low degree of feature collection, there is a high probability that the cluster includes images of several different people. Also, the similarity and co-occurrence degree calculated from the cluster feature of such a cluster have low credibility. Therefore, a more precise object priority can be evaluated by using cluster reliability to calculate the accuracy 1301.

(4-1. Outline)

The hardware configuration of the variant image management device 3500 is similar to that of the image management device 100 of Embodiment 1.

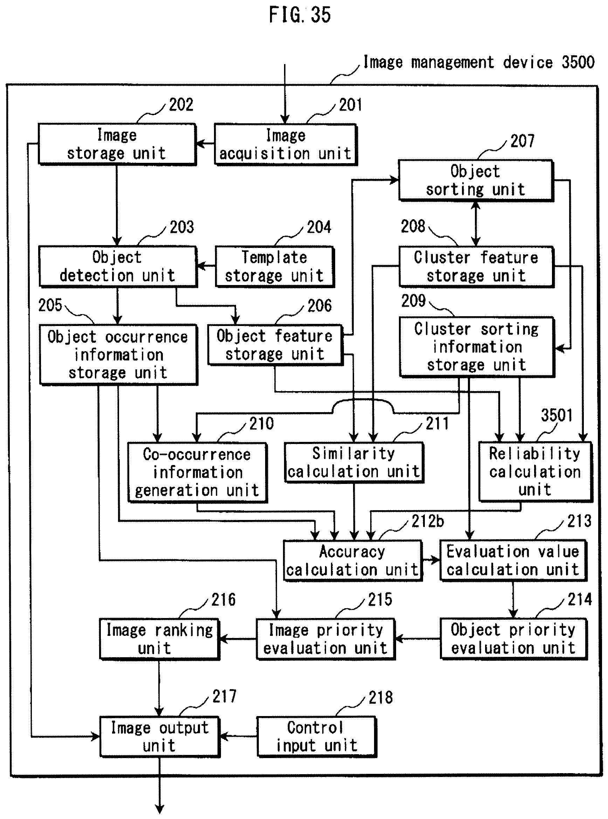

Fig. 35 shows the overall functional configuration of the variant image management device 3500. However, although peripheral devices are omitted, the reference numbers from Fig. 2 are used for functional blocks having the same function as the image management device 100.

The variant image management device 3500 differs from the image management device 100 in the addition of a reliability calculation unit 3501 that calculates cluster reliability, and the replacement of the accuracy calculation unit 212 with an accuracy calculation unit 212b. The following explanations center on these points of difference from the image management device 100.

The reliability calculation unit 3501 calculates the reliability of each cluster. The reliability calculation method is described in detail later.

The accuracy calculation unit 212b calculates the accuracy 1301 used in the evaluation value 1401 calculation process by the evaluation value calculation unit 213 using the reliability 3601 calculated by the reliability calculation unit 3501 in addition to the co-occurrence information 1100 and the similarity 1201 used by the accuracy calculation unit 212.

(4-2. Data)

(4-2-1. Reliability Information)

The reliability information 3600 indicates the reliability 3601 of each cluster. The reliability information 3600 is generated and updated by the reliability calculation unit 3501, and used by the accuracy calculation unit 212b.

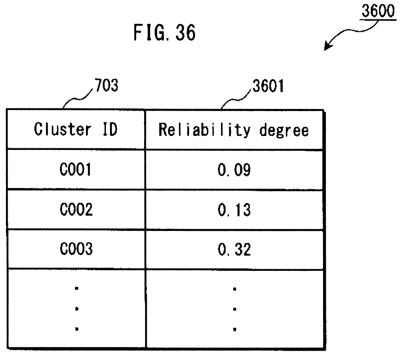

Fig. 36 illustrates the data configuration and a content example of the reliability information 3600.

Here, the reliability of a cluster is found by summing the difference between the cluster feature of a cluster and the object feature of each object belonging to that cluster, dividing the sum by the total quantity of objects belonging to the cluster, and taking the inverse of the result. Given that each feature is composed of multiple components, the difference between the cluster feature and object feature is found by doubling the difference between each feature component of the cluster and object and taking the square root of the result.

Let $P_c$ denote the cluster feature, $P_o$ the object feature, n the quantity of objects belonging to the cluster, and m the quantity of feature components. The cluster reliability is thus expressed as follows (Math. 1).

$$(\text{Math. 1}) \quad \frac{1}{\left( \dfrac{1}{n} \displaystyle\sum_{k=1}^{n} \left( \sqrt{ \displaystyle\sum_{i=1}^{m} \left( P_{c[i]} - P_{o[k][i]} \right)^2 } \right) \right)}$$

(4-3. Operations)

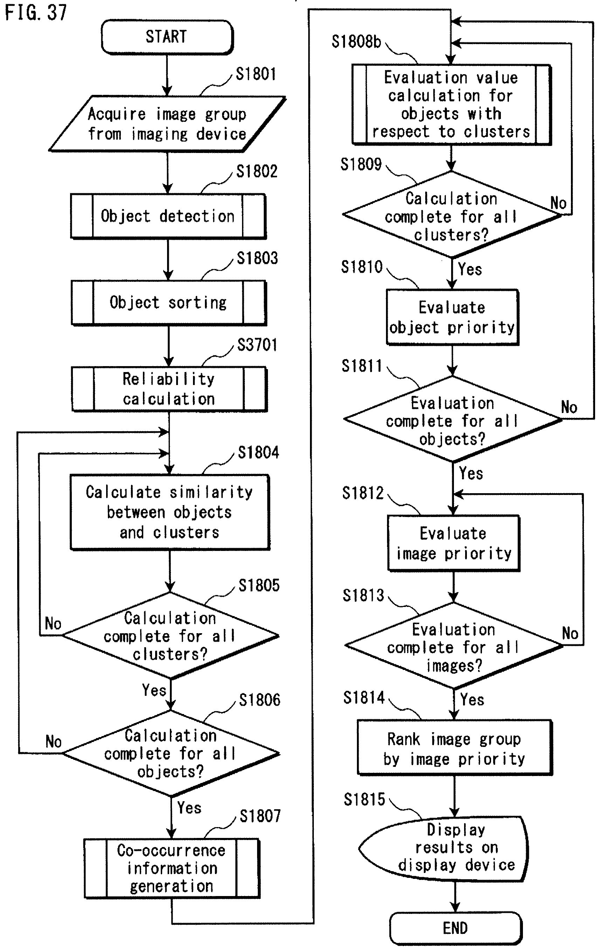

Fig. 37 is a flowchart showing the operations of the variant image management device 3500. Elements identical to the operations of the image management device 100 are assigned the reference numbers used in Fig. 18.

The operations of the variant image management device 3500 differ from those of the image management device 100 in that, for the former, a reliability 3601 calculation process (S3701) has been added after the object sorting process (S1803), and the content of the accuracy 1301 calculation process used in the evaluation value 1401 calculation process (S1808) has been modified (S1808b).

The following explanation centers on the points of difference from the operations of the image management device 100, describing the reliability calculation process (S3701) and the accuracy calculation process (S1808b) used in the evaluation value calculation process.

(4-3-1. Reliability Calculation Process)

The reliability 3601 calculation process is described below.

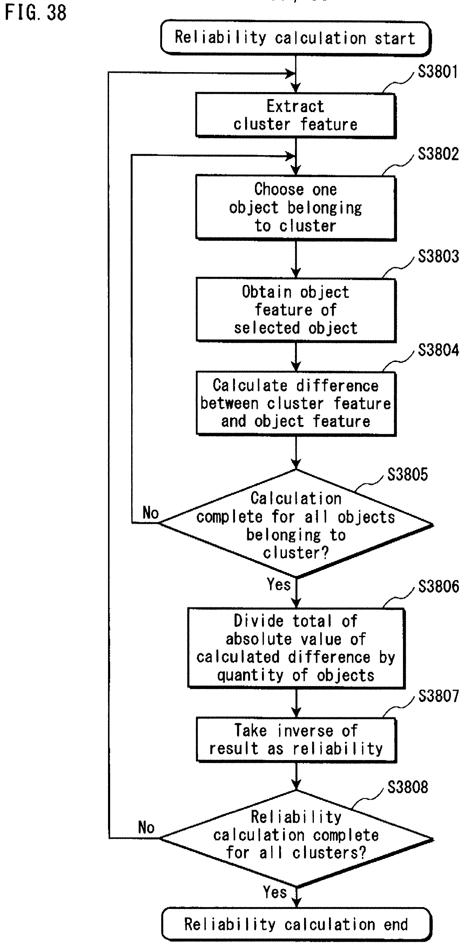

Fig. 38 is a flowchart of the reliability 3601 calculation process.

First, the reliability calculation unit 3501 obtains the cluster features from the cluster feature storage unit 208 (S3801) and chooses one object among the objects belonging to the cluster, based on the cluster sorting information 900 (S3802). Afterward, the object features of the chosen object are obtained from the object feature storage unit 206 (S3803), and the reliability calculation unit 3501 calculates the difference between the obtained object feature and the cluster feature (S3804). For example, the difference between the features of cluster C001 and object O001 is 12.43, found by adding the squares of the differences between the respective first feature components $(94.4-90.3)^2$, the second feature components $(90.2-98.4)^2$, and the third feature components $(79.8-71.4)^2$, and taking the square root of the total. The operations of steps S3801 through S3805 are repeated until the difference between the cluster feature and the object feature of all objects belonging to the cluster have been calculated.

Once all these differences have been calculated, the differences are summed and the result is divided by the total quantity of objects belonging to the cluster (S3806). The reliability of the cluster is the inverse of the obtained result (S3807). Steps S3801 through S3808 are repeated until the reliability of all clusters registered in the cluster sorting information 900 has been calculated.

(4-3-2. Accuracy Calculation Process)

The following describes the accuracy 1301 calculation process performed by the accuracy calculation unit 212b.

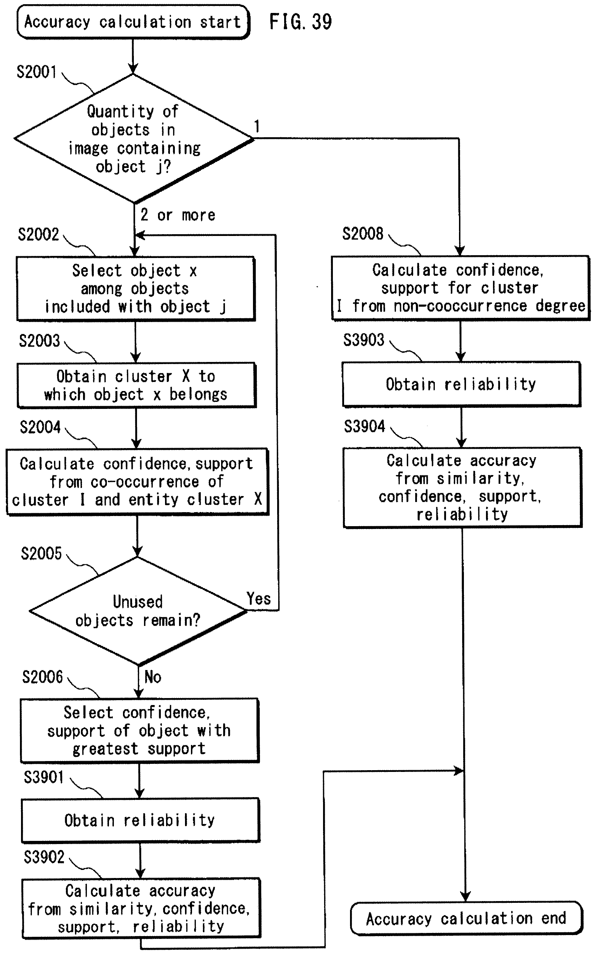

Fig. 39 is a flowchart of the accuracy calculation process. The accuracy calculation process here described is similar to that shown in Fig. 20, differing in the addition of a process where the reliability of the cluster to which object j belongs and the reliability of the cluster to which an object having the highest support belongs are obtained (S3901), and in that the accuracy calculation process performed in S2007 involves the reliability obtained in S3901 in addition to the similarity, the confidence, and the support factors (S3902).

The following description centers on the points of difference from Fig. 20.

Let two or more objects be included in image k. Here, much like in Embodiment 1, the reliability and support of the cluster having the greatest support are picked out from objects co-occurring with object j (S2001 through S2006).

Then, the reliability of cluster l, to which object j belongs, is obtained from the reliability of the cluster with the greatest support and the reliability information 3600 (S3901).

The reliability and support picked out in S2006, the similarity 1201 of object j to cluster l as calculated by the similarity calculation unit 211, the reliability of cluster l, to which object j belongs, as obtained in S3901, and the reliability of the cluster with the greatest support are substituted into the accuracy 1301 calculation formula. The accuracy 1301 is thus calculated (S3902). This formula is a logistic regression defining coefficients by performing logistic regression analysis in advance, based on statistics pertaining to cases where multiple objects exist in an image. The greater the influence of the explanatory variable on the accuracy calculation, the larger the coefficient becomes.

If object j is the only object included in image k, then the reliability and support are calculated according to the non-cooccurrence degree of cluster l, to which object j belongs (S2008).

Then, the reliability of cluster l is obtained from the reliability information 3600 (S3903). The reliability and support calculated in S2008, the similarity 1201 of object j to cluster l as calculated by the similarity calculation unit 211, and the reliability of cluster l, to which object j belongs, as obtained in S3903, are substituted into the accuracy 1301 calculation formula. The accuracy 1301 is thus calculated (S3904). This formula is a logistic regression defining coefficients by performing logistic regression analysis in advance, based on statistics pertaining to cases where only one object exists in an image. The greater the influence of the explanatory variable on the accuracy calculation, the larger the coefficient becomes.

Then, much as in Embodiment 1, for one object and one cluster, an evaluation value for the cluster is calculated from the accuracy and the quantity of objects belonging to the cluster, and the object priority of the object is calculated as the total of the evaluation values for the object with respect to all clusters. The image priority of each image is the total of the object priorities for all objects included therein. The images are displayed in order of decreasing image priority.

(5. Supplement)

The image management device pertaining to the present invention has been described above according to the Embodiments. However, the present invention is not limited to the image management device of the above-described Embodiments.

(1) Embodiments 1 through 3 have been described through the example of an image management device. However, the present invention is not limited to a device that principally manages images. For example, a storage device such as a file server that stores still images or videos, a playback device for still images or videos, an imaging device such as a digital camera, a cellular telephone with a camera, or a video camera, a PC (personal computer) and so on may all be used. Ultimately, any device capable of managing images may be used.

(2) In Embodiments 1 through 3, the image group was obtained from the imaging device 110 via a USB cable or the like, which is connected to the image acquisition unit 201 having a USB input terminal. However, the images need not necessarily be obtained from a USB input terminal. Other acquisition methods may also be used. For example, the image group may be input using a wireless transmission, or a recording medium such as a memory card.

(3) In Embodiments 1 through 3, the image group is input to the image management device from the imaging device 110. However, the invention is not limited to using an imaging device. Any device capable of inputting an image group to the image management device may be used. For example, the image group may be input over a network from a file server on which images are stored. Ultimately, anything enabling the image management device to obtain the image group may be used.

(4) In Embodiments 1 through 3, the image acquisition unit 201 acquires the image group from the imaging device 110, which is a peripheral device. However, the image group may also be acquired from an internal component of the image management device. For example, the image management device may include a hard disk or the like serving an image storage unit. The image acquisition unit 201 may then acquire the image group from the image storage unit.

(5) Provided that the image group to be evaluated can be acquired thereby, the image acquisition unit 201 need not necessarily acquire the entire image group at once. For example, the image acquisition unit 201 may acquire images one at a time or several at a time, and may add images to the image group 300 accordingly.

(6) In Embodiments 1 through 3, the image group 300 acquired by the image acquisition unit 201 is stored in the image storage unit 202 in entirety, with the pixel values of the image 302 included. However, the entirety of the image 302 need not necessarily be stored in the image storage unit 202 as long as the target image 302 is available for reference while the image management device performs processing thereon. For example, the image storage unit 202 may store the image ID 301 and a single target image 302 from the image group 300, one at a time. Thus, the image 302 needed by the object detection unit 203, the entity detection unit 2401, and the image output unit 217 may be acquired by the image acquisition unit 201 as required. Ultimately, any method allowing access to all images required for processing may be used with the image group 300.

(7) In Embodiments 1 through 3, the image IDs 301 generated by the image acquisition unit 201 are used to identify the images. However, provided that individual images can be identified, the image acquisition unit 201 need not necessarily generate the image IDs 301. For example, when images are acquired as files, the name of each file may be treated as the image ID 301. Alternatively, the image ID 301 may be the initial memory address of the image 302 upon storage in memory.

(8) In Embodiments 1 through 3, human faces are treated as objects and the template is data indicating patterns of features pertaining thereto. However, the present invention is not limited to human faces. For example, a pet animal may be treated as an object, and the template may be replaced with data patterns pertaining to that animal. Alternatively, templates pertaining to vehicles, buildings, and so on may be prepared so as to treat inanimate entities as objects. Furthermore, the present invention may be realized without the use of templates. Ultimately, there must be a standard according to which objects are detected, but any standard allowing object detection may be used.

(9) In Embodiments 1 through 3, the object sorting unit 207 calculates cluster features 702 for each of the clusters from the object features 601 of all objects sorted into the clusters. However, the invention is not limited to this calculation. For example, the cluster feature storage unit 208 may store a predetermined cluster feature 702. Such a cluster feature 702 may be used as-is, or may be modified. Ultimately, the clusters may have any cluster features 702 allowing the similarity 1201 between objects and the clusters to be calculated.

(10) In Embodiments 1 through 3, the cluster sorting information storage unit 209 also stores the quantity of objects sorted into each cluster. However, the quantity of objects need not necessarily be stored. For example, when the quantity of objects belonging to a cluster is needed, the unit using this quantity may count the quantity at that time. As such, the quantity of objects need not be stored in the cluster sorting information storage unit 209. Ultimately, the quantity of objects sorted into each cluster need only be obtainable.

(11) In Embodiments 1 through 3, the image priority is the total of the object priorities 1501 of all objects included in the image, such that an image including multiple prioritized objects is evaluated as a high-priority image. However, the invention is not limited in this manner. For example, the average object priority of objects included in the image may be used, or the highest object priority may be selected and made into the image priority as-is. Alternatively, the evaluation value of an image may be weighted according to the proportional area thereof occupied by the objects. Ultimately, the image priority may be calculated in any manner that makes use of the object priorities of objects included in the image.

(12) In Embodiments 1 through 3, the image priority is evaluated using the object priority only. However, the invention is not limited in this manner. For example, the image priority may be evaluated by first evaluating a priority for the background, capture conditions, and so on, and adding this priority to the object priority. Ultimately, other evaluation methods may be used in combination with the object priority to evaluate the image priority.

(13) In Embodiments 1 through 3, the image group 300 is re-ordered in descending order of image priority for display on the display device 120. However, the invention is not limited in this manner. For example, the image group 300 may be displayed in the order of input, while the image priority is output as a meta data value added thereto. Ultimately, the image priority need only be evaluated.

(14) In Embodiments 1 through 3, the image output unit 217 includes an HDMI output terminal, such that video is output from the image management device to the display device 120 via an HDMI cable. However, as long as output remains possible, the invention is not limited in this manner. First of all, video output need not be limited to an HDMI output terminal using an HDMI cable. For example, video may be output to the display device 120 using a DVI cable. Also, video need not necessarily be output by the display device, and the output content need not necessarily be video. For example, a printer may be connected and used to print high-priority images. Also, an external storage device may be connected and used to record image files with meta data of high-priority images attached thereto.

(15) In Embodiments 1 through 3, the image management device has a memory for storing data. However, as long as there is a means of storing data, the invention is not limited in this manner. For example, a hard disk or other data recording medium may also be used.

(16) In Embodiments 1 through 3, the accuracy 1301 calculation makes use of logistic regression analysis. However, logistic regression analysis need not necessarily be used. Any other method that uses the similarity and the co-occurrence information, or that uses the similarity, co-occurrence information, and reliability, may be used. Also, although the total accuracy 1301 for a single object with respect to all clusters will not always be 1, the accuracy 1301 may be normalized for a total of 1.

(17) In Embodiments 1 through 3, the accuracy is calculated using the co-occurrence information. However, the co-occurrence information need not necessarily be used. For example, the accuracy may be calculated using only the similarity, or may be calculated using the similarity and the reliability. Furthermore, the evaluation value may be calculated from the similarity and the quantity of objects belonging to a cluster, without using the accuracy. In addition, the quantity of objects belonging to the same cluster as an object may be used as-is for the object priority, without recourse to the similarity. Ultimately, at least the quantity of objects belonging to the same cluster as the object in question must be used when evaluating the object priority.

(18) In Embodiments 1 through 3, the evaluation value of an object with respect to a cluster is calculated by multiplying the accuracy of the object with respect to the cluster by the quantity of objects belonging to the cluster. However, the invention is not limited to this method. For example, the calculation method may involve prioritizing the cluster more than other clusters by multiplying the evaluation value of the cluster to which the object belongs by two. Ultimately, the evaluation value calculation need only involve the accuracy and the quantity of objects belonging to the cluster.

(19) In Embodiments 1 through 3, the object priority of a given object is evaluated using the evaluation values thereof with respect to all clusters. However, the evaluation values for all clusters need not necessarily be used. For example, the evaluation value may be calculated for a cluster only when the similarity of the object therewith exceeds a predetermined value, and the evaluation value may be used alone. Ultimately, at least the quantity of objects belonging to the same cluster as the object in question must be used when evaluating the object priority.

(20) In Embodiments 1 through 3, the method by which objects are sorted into clusters is described as using the k-means method. However, the invention is not limited to the k-means method, as long as objects are sorted into clusters. For example, the SVM method explained in Embodiment 2 for sorting entities may be used. Also, although the cluster feature 702 is automatically calculated using the k-means method, the automatically-calculated cluster feature 702 need not necessarily be used. For example, the median value of the feature amounts for objects belonging to the cluster may be used.

(21) In Embodiments 1 and 3, when the accuracy of a given object with respect to a given cluster is calculated, the confidence and support factors of a selected object having the highest support is used for the calculation whenever the image that includes the given object includes two or more other objects. However, two or more objects may be selected and the confidence and support factors of both may be used.

(22) In Embodiments 1 through 3, co-occurrence information is generated for all objects with respect to all clusters. However, the invention is not limited in this manner. For example, a variation in which co-occurrence information is not generated for co-occurrences within the same cluster is also plausible. In such a variation, when a one-to-one correspondence exists between clusters and human beings, this type of co-occurrence can be ignored given that two or more of a single person cannot appear in a single image. Also, once the co-occurrence degree 1101 of cluster A with respect to cluster B is known, the co-occurrence degree 1101 of cluster B with respect to cluster A is also known. Therefore, generating either one of the two is sufficient. Thus, only one of these two co-occurrence degrees 1101 need be generated. For example, when a size relationship exists among cluster IDs, the co-occurrence degree 1101 of a cluster having a small cluster ID with respect to a cluster having a large cluster ID may be generated alone.

(23) In Embodiments 1 and 3, the non-cooccurrence degree 1102 is used to calculate the accuracy when only one object is included in an image. However, references other than the non-cooccurrence degree 1102 may also be used to calculate the accuracy. For example, the accuracy may be calculated using the similarity alone, or may be calculated using the similarity and the reliability.

(24) In Embodiment 2, the priority of co-occurring entities is not calculated. However, the priority of the co-occurring entities may be calculated and used to evaluate the image priority. For example, the priority of a co-occurring entity may use the quantity of co-occurring entities belonging to the same entity cluster thereas, and the image priority of the image may have the co-occurring entity priority added to the total object priority thereof. Ultimately, the image priority of an image need only use the object priority for evaluation.

(25) In Embodiment 2, the entity cluster sorting information storage unit 2404 stores the quantity of co-occurring entities sorted into each entity cluster. However, the quantity of entities need not necessarily be stored. For example, when the quantity of entities belonging to an entity cluster is needed, the unit using this quantity may count the quantity at that time. As such, the quantity of entities need not be stored in the entity cluster sorting information storage unit 2404.

(26) In Embodiment 2, when the accuracy of a given object with respect to a given cluster is calculated, the confidence and support factors of a selected co-occurring entity having the highest support is used for the calculation whenever the image that includes the given object includes two or more other entities. H owever, two or more entities may be selected and the confidence and support factors of both may be used.

(27) In Embodiment 2, the co-occurring entities are sorted into entity clusters using SVM. However, as long as the co-occurring entities are sorted into entity clusters, SVM need not necessarily be used. For example, the k-means method described for sorting objects into clusters may be used.

(28) In Embodiment 2, when an image includes no entities, the accuracy of objects included in that image with respect to clusters is 0. However, the accuracy need not necessarily be 0. For example, the accuracy of an object with respect to clusters when no entities are included in the image may be calculated using the similarity only.

(29) In Embodiment 2, a co-occurring entity detection process and a co-occurring entity sorting process are added after the object sorting process. However, these processes may occur at any point, between image obtention and co-occurrence information generation. For example, the co-occurring entity detection process and the co-occurring entity s orting process may immediately precede the co-occurrence information generation process.

(30) In Embodiment 3, the difference between each feature component of a cluster and of an object is doubled and summed, then square root of the result is taken to calculate the difference between the cluster feature of the cluster and the object feature of the object. However, the invention is not limited in this manner. For example, the absolute value of the difference between each feature component of a cluster and object may be found, and the arithmetic mean of these values used as the difference between features.

(31) In Embodiment 3, the total difference between the cluster feature of a cluster and the object features of all objects belonging thereto is divided by the total quantity of objects belonging to the cluster, and the reliability is calculated by taking the inverse of the result. However, the invention is not limited in this manner. For example, the distribution or the standard deviation of the cluster feature of a cluster and the object feature of all objects belonging thereto may be calculated, and the inverse thereof taken as the reliability.

(32) In Embodiments 1 through 3, a Gabor filter is given as an example of the method by which feature amounts are extracted. However, any method allowing features to be extracted from images may be used.

(33) Each of the above-described Embodiments and variations may be partially combined.

(34) The present invention may be realized as a control program made up of program code for causing the processor of an image management device, or the processor of various circuits connected to such a processor, to execute the image priority evaluation process described by Embodiments 1 through 3 (see Figs. 18-20, 29-31, 34, and 37-39). The control program may be distributed by being recorded onto a recording medium or by being transported over various communication lines and the like. The recording medium may be an IC card, a hard disk, an optical disc, a floppy disc, ROM, and so on. The transported and distributed control program is used by being stored on a memory readable by the processor. The processor realizes the functions described by each of the Embodiments in execution of the control program. Also, a portion of the control program may be transmitted over any type of network to another device (processor) capable of executing programs that is distinct from the image management device, and the other device may execute the portion of the control program.

(35) The components making up the image management device may, in whole or in part, be realized as one or more integrated circuits (IC, LSI or the like). Furthermore, the components of the image management device may be realized as a single integrated circuit (as one chip) in combination with other elements.

The effects of the components and variations of the image management device as aspects of the present invention are further discussed below.

(a) In one aspect of the present invention, an image management device comprises: an image acquisition unit acquiring images; an object detection unit detecting, for each of the images acquired by the image acquisition unit, an object included in the image by extracting an object feature amount with reference to a predetermined standard, the object feature amount pertaining to a distribution of pixel values for a plurality of pixels corresponding to the object; an object sorting unit sorting each object detected in each of the images acquired by the image acquisition unit into one of a plurality of clusters, according to the object feature amount of each object; an object priority evaluation unit evaluating an object priority for each object using a relative quantity of objects belonging to the relevant cluster along with the object; and an image priority evaluation unit evaluating an image priority for each image, the image priority being evaluated for each image from the object priority of the object included in the image. According to this structure, the image management device calculates an object priority, i.e., the priority of a human face that is an object included in an image, assuming that the predetermined standard defines the features of a human face, from an occurrence frequency of an object belonging to a cluster that represents the person whose face is included in the image. The image management device then calculates the image priority of each image so as to reflect the object priority of each object included in the image, and ranks the image according to the resulting image priority. Thus, an image in which a frequently-occurring person is included has a higher rank. A user can more easily search an enormous number of images to find images in which a person of interest appears by searching through higher-ranked images, i.e., images having a high priority.

(b) In another aspect of the present invention, the object priority evaluation unit evaluates the object priority of each one of the objects from: an evaluation value of the one object with respect to the relevant cluster, calculated from (i) the quantity of objects belonging to a common one of the clusters with the one object, and (ii) a similarity factor indicating the extent to which the object feature amount of the one object and a cluster feature amount of the relevant cluster are similar, the cluster feature amount being a representative value of feature amounts in the relevant cluster, and an evaluation value of the one object with respect to a cluster other than the relevant cluster to which the one object belongs, calculated from (i) the quantity of objects belonging to the other cluster, and (ii) the similarity factor of the object feature amount of the one object to the cluster feature amount of the other cluster. According to this structure, even if the object is mistakenly sorted into a different cluster than other objects representing the same person, the probability that the object represents the same person as other objects belonging to the cluster (the accuracy) is calculated from the similarity. Given that the object priority is evaluated using the similarity weighted according to the quantity of objects belonging to the cluster, the evaluated object priority nevertheless remains similar to that obtained when the object is correctly identified as showing the person of interest Therefore, the image priority is evaluated with higher precision.

(c) In a further aspect of the present invention, when a target image in which a first object is included also includes a second object, the object priority evaluation unit calculates the evaluation value for the first object with a first cluster to which the first object belongs, or to which the first object does not belong, further using a co-occurrence degree for the first cluster with respect to a second cluster, and the co-occurrence degree for the first cluster with respect to the second cluster represents the probability of the phenomenon of another object belonging to the second cluster with the second object being included in a common image with the first object belonging to the first cluster, within the group of images acquired by the image acquisition unit. According to this structure, the object priority may plausibly be evaluated as being low, despite the presence of a certain person, when the probability of a person being the certain person is calculated as being low from the similarity of the object features taken alone. However, according to the above, the probability of the person being the certain person is calculated not only from the similarity of the object features but also from the co-occurrence relationship between persons. Therefore, even if the person is deemed likely to be someone else based on the object features alone, the object priority nevertheless remains near the result expected when the object is correctly identified as being the certain person. Thus, the image priority is evaluated with even higher precision.

(d) In yet another aspect of the present invention, when the target image in which the first object is included also includes the second object, the object priority evaluation unit calculates: (i) an accuracy for the first object with respect to the first cluster, using: a confidence factor for the first object with respect to the first cluster, calculated by dividing the co-occurrence degree of the first cluster with the second cluster to which the second object belongs by the quantity of objects belonging to the second cluster; a support factor for the first object with respect to the first cluster, calculated by dividing the co-occurrence degree of the first cluster with the second cluster by the total quantity of objects detected by the object detection unit; and a similarity factor for the first object with respect to the first cluster; and (ii) the evaluation value of the first object with respect to the first cluster, using: the accuracy of the first object with respect to the first cluster; and the quantity of objects belonging to the first cluster. According to this structure, given that the accuracy of a first object with respect to a first cluster is calculated using the confidence factor of the first object with respect to the first cluster, the support factor of the first object with respect to the first cluster, and the similarity of the first object with respect to the first cluster, the evaluation value of the first object with respect to the first cluster is in turn calculable from the accuracy of the first object with respect to the first cluster.

(e) In an alternate aspect of the present invention, when the target image in which the first object is included also includes the second object, the object priority evaluation unit calculates the accuracy further using a reliability factor calculated from: for the first cluster, the difference between the cluster feature amount of the first cluster and the object feature amount of each object belonging to the first cluster, indicating an extent to which the object feature amounts are collected in the cluster feature amount, and for the second cluster, the difference between the cluster feature amount of the second cluster and the object feature amount of each object belonging to the second cluster. According to this structure, the accuracy of the first object with respect to the first cluster is calculated from the reliability of the first cluster and the reliability of the second cluster. Thus, a more precise accuracy is calculable for the first object with respect to the first cluster.

In another alternate aspect of the present invention, when the target image in which the first object is included also includes the second object, the object priority evaluation unit calculates the accuracy of the first object with respect to the first cluster using a logistic regression involving, as explanatory variables, the use of the confidence factor of the first object with respect to the first cluster, the support factor of the first object with respect to the first cluster, the similarity factor of the first object with respect to the first cluster, the reliability factor of the first cluster, and the reliability factor of the second cluster. Logistic regression analysis determines the coefficient of each explanatory variable from the effect size of the accuracy according to actual measured values or similar. Therefore, according to this structure, the accuracy of the first object with respect to the first cluster is calculated more precisely.

(g) In yet another alternate aspect of the present invention, when the target image in which the first object is included also includes the second object, the object priority evaluation unit calculates the accuracy of the first object with respect to the first cluster using a logistic regression involving, as explanatory variables, the use of the confidence factor of the first object with respect to the first cluster, the support factor of the first object with respect to the first cluster, and the similarity factor of the first object with respect to the first cluster. Logistic regression analysis determines the coefficient of each explanatory variable from the effect size of the accuracy according to actual measured values or similar. Therefore, according to this structure, the accuracy of the first object with respect to the first cluster is calculated more precisely.

(h) In a further alternate aspect of the present invention, when a target image in which an object is included includes no other objects, the object priority evaluation unit calculates the evaluation value of the object with respect to the relevant cluster to which the object belongs, and with respect to any other cluster to which the object does not belong, further using: a non-cooccurrence degree for the relevant cluster representing the probability of the phenomenon of the object belonging to the relevant cluster appearing alone in one of the images within the group of images acquired by the image acquisition unit. According to this structure, a non-cooccurrence degree, representing the occurrence of the phenomenon of an object being included alone in an image, is used to calculate the evaluation value of the cluster to which the object belongs, and of clusters to which the object does not belong. Thus, the probability of an object belonging to a cluster is calculated even when the object appears alone in the image.

(i) In a variant aspect of the present invention, when a target image in which one of the objects is included includes no other objects, the object priority evaluation unit calculates: (i) the accuracy of the one object with respect to the relevant cluster, using: a confidence factor calculated by dividing a non-cooccurrence degree of the relevant cluster to which the one object belongs, or of any other cluster to which the one object does not belong, by the quantity of objects belonging to the relevant cluster; a support factor calculated by dividing the non-cooccurrence degree of the relevant cluster by the total quantity of objects detected by the object detection unit; and the similarity factor of the one object with respect to the relevant cluster, and (ii) the evaluation value of the one object with respect to the relevant cluster, and with respect to any other cluster, using: the accuracy of the one object with respect to the relevant cluster; and the quantity of objects belonging to the relevant cluster. According to this structure, the accuracy of the first object with respect to the first cluster is calculated from the non-cooccurrence confidence factor of the first object with respect to the first cluster, the non-cooccurrence support of the first object with respect to the first cluster, and the similarity of the first object with respect to the first cluster. Thus, the probability that the first object belongs to the first cluster is calculated.

(j) In another variant aspect of the present invention, the object detection unit extracts the object feature amount of each of the objects according to a reference pertaining to feature amounts of a human face. According to this structure, human faces showing strong human features are extracted as objects. Thus, the probability that objects are correctly sorted is high. As a result, images showing a person of interest for the user are ranked as high-priority images.

(k) In a further variant aspect of the present invention, the image management device further comprises: an entity detection unit detecting one or more entities in each image by extracting entity feature amounts based on a predetermined reference, the entity feature amounts pertaining to a distribution of pixel values for a plurality of pixels forming one of the entities included in the particular image; and an entity sorting unit sorting the entities detected in each image acquired by the image acquisition unit into one of a plurality of entity clusters, according to the entity feature amount of each of the entities, wherein when the particular image in which the one object is included also includes an entity, the object priority evaluation unit calculates the evaluation value of the one object with respect to the relevant cluster to which the one object belongs, and with respect to any other cluster to which the one object does not belong, further using the co-occurrence degree of the relevant cluster with respect to the relevant entity cluster, and the co-occurrence degree represents the probability of the phenomenon of another object belonging to the relevant cluster being included in a common image with another entity belonging to a common entity cluster with the entity included in the particular image with the one object, within the image group acquired by the image acquisition unit. An entity cluster is a sorting unit into which entities are sorted according to predetermine criteria. Each entity cluster corresponds to a different range of entity features.

According to this structure, the co-occurrence relationships between human beings and inanimate entities is used when, for example, a person is displayed alone in an image, making judgement based on co-occurrence relationships between people difficult. This makes identification possible.

(l) In an alternate variant of the present invention, the object sorting unit sorts each of the objects into the plurality of clusters in accordance with the k-means method. According to this structure, the k-means method is used for sorting objects. Therefore, objects are sorted into clusters using a simple algorithm

(m) In a futher alternate variant of the present invention, the object priority evaluation unit calculates the object priority using a reliability factor for each cluster, the reliability factor being calculated from the difference between the cluster feature amount of each cluster and the object feature amount of each object belonging to each cluster, indicating an extent to which the object feature amounts are collected in each of the cluster feature amounts. According to this structure, the object priority is calculated from the reliability of the cluster to which the object belongs and from the total quantity of objects belonging to the cluster. Therefore, the object priority is calculated more precisely than would be the case for object priority calculated only from the quantity of objects belonging to the cluster.

**[Industrial Applicability]**

The present invention of an image management device and image management method is applicable to a device storing still images or video, playback device for still images or video, digital camera, cellular telephone equipped with camera, video camera, PC and the like.

**[Reference Signs List]**

| | |
|---|---|
| 10 | Image management system |
| 100 | Image management device |
| 110 | Imaging device |
| 120 | Display device |
| 130 | Controller |
| 201 | Image acquisition unit |
| 202 | Image storage unit |
| 203 | Object detection unit |
| 204 | Template storage unit |
| 205 | Object occurrence information storage unit |
| 206 | Object feature storage unit |
| 207 | Object sorting unit |
| 208 | Cluster feature storage unit |
| 209 | Cluster sorting information storage unit |

| 210, 210a | Co-occurrence information generation unit |
|---|---|
| 211 | Similarity calculation unit |
| 212, 212a, 212b | Accuracy calculation unit |
| 213 | Evaluation value calculation unit |
| 214 | Object priority evaluation unit |
| 215 | Image priority evaluation unit |
| 216 | Image ranking unit |
| 217 | Image output unit |
| 218 | Control input unit |
| 700 | Feature space |
| 701 | Cluster |
| 702 | Cluster feature |
| 703 | Cluster ID |
| 704 | Cluster border |
| 2300 | Variant image management device |
| 2301 | Entity unit |
| 2401 | Entity detection unit |
| 2402 | Entity occurrence information storage unit |
| 2403 | Entity sorting unit |
| 2404 | Entity cluster sorting information storage unit |
| 3500 | Variant image management device |
| 3501 | Reliability calculation unit |

**Claims**

1. An image management device, comprising:

an image acquisition unit (201) adapted to acquiring an image group;
an object detection unit (203) adapted to detecting, for each image (302) acquired by the image acquisition unit (201), one or more objects included in the image (302);
an object sorting unit (207) adapted to sorting the objects detected in each image (302) acquired by the image acquisition unit (201) into one of a plurality of clusters (701a-c), according to an object feature amount representing features of each of the object;
an object priority evaluation unit (213,214) adapted to calculating an object priority for each of the objects, by calculating an evaluation value for the object from an accuracy representing relevance of the object to a relevant cluster and the relative quantity of objects belonging to the relevant cluster; and
an image priority evaluation unit (215) adapted to calculating an image priority for each image by summing object priorities calculated for the objects included in the image, wherein the object priority evaluation unit (210,212,214) is adapted (i) to calculate a similarity factor that indicates how similar the object feature amount of the object is to a cluster feature amount of the relevant cluster, wherein the cluster feature amount is a representative value of object feature amounts of objects in the relevant cluster, (ii) to calculate, when the image includes another object sorted into a cluster other than the relevant cluster, a co-occurrence degree indicating a count of co-occurrence of the object and said another object in the images of the image group, and (iii) to calculate the accuracy based on the similarity factor and co-occurrence information that includes the co-occurrence degree.

2. The image management device of Claim 1, wherein the object priority evaluation unit is adapted to calculate the object priority of an object from:

the evaluation value and
an evaluation value of the object with respect to a cluster other than the relevant cluster, calculated from the quantity of objects belonging to the other cluster, and a similarity factor of the object feature amount of the object to a cluster feature amount of the other cluster, wherein the cluster feature amount is a representative value of object feature amounts of objects in the other cluster.

3. The image management device of Claim 2, wherein the object priority evaluation unit is adapted to calculate, when a target image in which a first object is included also includes a second object, the accuracy of the first object with respect to a first cluster that includes the first object using a confidence factor, a support factor, and the similarity factor for the first object with respect to the first cluster, wherein
the confidence factor of the first object with respect to the first cluster is calculated by dividing the co-occurrence degree of the first cluster with a second cluster to which the second object belongs by the quantity of objects belonging to the second cluster, and
the support factor of the first object with respect to the first cluster is calculated by dividing the co-occurrence degree of the first cluster with the second cluster by the total quantity of objects detected by the object detection unit.

4. The image management device of Claim 3, wherein the object priority evaluation unit is adapted to calculate, when the target image in which the first object is included also includes the second object, the accuracy further using a reliability factor calculated from:

for the first cluster, the difference between the cluster feature amount of the first cluster and the object feature amount of each object belonging to the first cluster, indicating an extent to which the object feature amounts are collected in the cluster feature amount, and

for the second cluster, the difference between the cluster feature amount of the second cluster and the object feature amount of each object belonging to the second cluster.

5. The image management device of Claim 4, wherein the object priority evaluation unit is adapted to calculate, when the target image in which the first object is included also includes the second object, the accuracy of the first object with respect to the first cluster by substituting

the confidence factor of the first object with respect to the first cluster, the support factor of the first object with respect to the first cluster, the similarity factor of the first object with respect to the first cluster, the reliability factor of the first cluster, and the reliability factor of the second cluster

into a logistic regression formula in which a coefficient defining a relationship between an explanatory variable and a target variable is predefined by performing logistic regression analysis on learning data in which an object exists alone in an image.

6. The image management device of Claim 3, wherein the object priority evaluation unit is adapted to calculate, when the target image in which the first object is included also includes the second object, the accuracy of the first object with respect to the first cluster by substituting

the confidence factor of the first object with respect to the first cluster, the support factor of the first object with respect to the first cluster, and the similarity factor of the first object with respect to the first cluster

into a logistic regression formula in which a coefficient defining a relationship between an explanatory variable and a target variable is predefined by performing logistic regression analysis on learning data in which an object exists alone in an image.

7. The image management device of Claim 1, wherein the object priority evaluation unit is adapted to calculate the accuracy for each of the objects from non-co-occurrence information and the similarity factor, wherein

the non-co-occurrence information is information pertaining to co-occurrence between the clusters and includes a non-co-occurrence degree based on the number of times non-co-occurrence relationships are detected within the image group, and the similarity factor indicates the extent to which the object feature amount of each of the objects and a cluster feature amount of the relevant cluster have similar values.

8. The image management device of Claim 7, wherein the object priority evaluation unit is adapted to calculate, when a target image in which an objects is included includes no other objects:

(i) the accuracy of the object with respect to the relevant cluster, using:

a confidence factor calculated by dividing a non-co-occurrence degree of the relevant cluster, or of any other cluster to which the one object does not belong, by the quantity of objects belonging to the relevant cluster; a support factor calculated by dividing the non-co-occurrence degree of the relevant cluster by the total quantity of objects detected by the object detection unit; and the similarity factor of the one object with respect to the relevant cluster, and

(ii) the evaluation value of the one object with respect to the relevant cluster, and with respect to any other cluster, using:

the accuracy of the one object with respect to the relevant cluster; and the quantity of objects belonging to the relevant cluster.

9. The image management device of Claim 2, wherein the object detection unit is adapted to extract the object feature amount of each of the objects according to a reference pertaining to feature amounts of a human face.

10. The image management device of Claim 9, further comprising:

an entity detection unit adapted to detecting one or more entities in each image by extracting entity feature amounts based on a predetermined reference, the entity feature amounts pertaining to a distribution of pixel values for a plurality of pixels forming one of the entities included in the particular image, wherein an entity is an object that is not a human face; and an entity sorting unit adapted to sorting an entity detected in an image acquired by the image acquisition unit into one of a plurality of entity clusters, according to the entity feature amount of the entity, wherein

the object priority evaluation unit is adapted to calculate, when an image in which an object is included also includes an entity, the evaluation value of the one object with respect to the relevant cluster, and with respect to any other cluster to which the object does not belong, further using the co-occurrence degree of the relevant cluster with respect to the relevant entity cluster, and

the co-occurrence degree represents the probability of the phenomenon of another object belonging to the relevant cluster being included in a common image with another entity belonging to a common entity cluster with the entity included in the particular image with the one object, within the image group acquired by the image acquisition unit.

11. The image management device of Claim 1, wherein the object sorting unit is adapted to sort an object into the plurality of clusters in accordance with the k-means method.

12. The image management device of Claim 1, wherein the object priority evaluation unit is adapted to calculate the object priority using a reliability factor for each cluster, the reliability factor being calculated from the difference between the cluster feature amount of each cluster and the object feature amount of each object belonging to each cluster, indicating an extent to which the object feature amounts are collected in each of the cluster feature amounts.

13. An image management method, comprising:

an image acquisition step of acquiring an image group;
an object detection step of detecting, for each image acquired in the image acquisition step, one or more objects included in the image;
an object sorting step of sorting the objects detected in each image acquired in the image acquisition step into one of a plurality of clusters, according to an object feature amount representing a feature of the object;
an object priority evaluation step of calculating an object priority for each of the objects, by calculating an evaluation value for the object from an accuracy representing relevance of the object to a relevant cluster and the relative quantity of objects belonging to the relevant cluster; and
an image priority evaluation step of calculating an image priority for each image by summing object priorities calculated for objects included in the image; wherein the object priority evaluation step involves (i) calculating a similarity factor that indicates how similar the object feature amount of the object is to a cluster feature amount of the relevant cluster, where the cluster feature amount is a representative value of object feature amounts of objects in the relevant cluster, (ii) calculating, when the image includes another object sorted into a cluster other than the relevant cluster, a co-occurrence degree indicating a count of co-occurrence of the object and said another object in the images of the image group, and (iii) calculating the accuracy based on the similarity factor and co-occurrence information that includes the co-occurrence degree.

14. A computer program comprising instructions which, when the program is executed by a computer, cause the computer to carry out the steps of the method of claim 13.

15. A recording medium on which is recorded the computer-executable program according to claim 14.

16. An integrated circuit, comprising an image management device according to claim 1.

**Patentansprüche**

1. Bildverwaltungsvorrichtung, umfassend:

eine Bildaufnahmeeinheit (201), die dazu eingerichtet ist, eine Bildgruppe aufzunehmen;
eine Objektermittlungseinheit (203), die dazu eingerichtet ist, für jedes Bild (302), das von der Bildaufnahmeeinheit (201) aufgenommen wird, ein oder mehrere Objekte zu ermitteln, die in dem Bild (302) enthalten sind;
eine Objektsortierungseinheit (207), die dazu eingerichtet ist, die Objekte, die in jedem von der Bildaufnahmeeinheit (201) aufgenommenen Bild (302) ermittelt werden, in einen aus einer Vielzahl von Clustern (701a-c) zu sortieren, entsprechend einer Objektmerkmalsgröße, die Merkmale der einzelnen Objekte repräsentiert;
eine Objektprioritätsevaluierungseinheit (213, 214), die dazu eingerichtet ist, eine Objektpriorität für jedes der Objekte durch Berechnen eines Evaluierungswertes für das Objekt anhand einer Genauigkeit zu berechnen, welche die Relevanz des Objekts für einen relevanten Cluster repräsentiert, und der relativen Menge von Objekten, die zu dem relevanten Cluster gehören; und
eine Bildprioritätsevaluierungseinheit (215), die dazu eingerichtet ist, eine Bildpriorität für jedes Bild durch Summieren der Objektprioritäten zu berechnen, die für die im Bild enthaltenen Objekte berechnet werden, wobei

die Bildprioritätsevaluierungseinheit (210, 212, 214) dazu eingerichtet ist, (i) einen Ähnlichkeitsfaktor zu berechnen, der anzeigt, wie ähnlich die Objektmerkmalsgröße des Objekts einer Clustermerkmalsgröße des relevanten Clusters ist, wobei die Clustermerkmalsgröße ein repräsentativer Wert der Objektmerkmalsgrößen von Objekten in dem relevanten Cluster ist, (ii) wenn das Bild ein weiteres Objekt enthält, das in einen anderen als den relevanten Cluster sortiert wurde, einen Kookkurrenzgrad zu berechnen, der einen Zähler der Kookkurrenz des Objekts und des anderen Objekts in den Bildern der Bildgruppe anzeigt, und (iii) die Genauigkeit basierend auf dem Ähnlichkeitsfaktor und den Kookkurrenzinformationen zu berechnen, welche den Kookkurrenzgrad enthalten.

2. Bildverwaltungsvorrichtung nach Anspruch 1, wobei die Objektpioritätsevaluierungseinheit dazu eingerichtet ist, die Objektpriorität eines Objekts anhand Folgendem zu berechnen:

dem Evaluierungswert und
einem Evaluierungswert des Objekts bezüglich eines anderen Clusters als dem relevanten Cluster, der anhand der Quantität von Objekten berechnet wird, die zu dem anderen Cluster gehören, und einem Ähnlichkeitsfaktor der Objektmerkmalsgröße des Objekts zu einer Clustermerkmalsgröße des anderen Clusters, wobei die Clustermerkmalsgröße ein repräsentativer Wert von Objektmerkmalsgrößen von Objekten in dem anderen Cluster ist.

3. Bildverwaltungsvorrichtung nach Anspruch 2, wobei die Objektpioritätsevaluierungseinheit dazu eingerichtet ist, wenn ein Zielbild, in dem ein erstes Objekt enthalten ist, auch ein zweites Objekt enthält, die Genauigkeit des ersten Objekts bezüglich eines ersten Clusters zu berechnen, der das erste Objekt enthält, unter Verwendung eines Konfidenzfaktors, eines Unterstützungsfaktors und des Ähnlichkeitsfaktors für das erste Objekt bezüglich des ersten Clusters, wobei
der Konfidenzfaktor des ersten Objekts bezüglich des ersten Clusters durch Teilen des Kookkurrenzgrades des ersten Clusters mit einem zweiten Cluster, zu dem das zweite Objekt gehört, durch die Quantität von Objekten berechnet wird, die zu dem zweiten Cluster gehören, und
der Unterstützungsfaktor des ersten Objekts bezüglich des ersten Clusters durch Teilen des Kookkurrenzgrades des ersten Clusters mit dem zweiten Cluster durch die Gesamtmenge von Objekten berechnet wird, die von der Objektermittlungseinheit ermittelt werden.

4. Bildverwaltungsvorrichtung nach Anspruch 3, wobei die Objektpioritätsevaluierungseinheit dazu eingerichtet ist, wenn das Zielbild, in dem das erste Objekt enthalten ist, auch das zweite Objekt enthält, die Genauigkeit des Weiteren unter Verwendung eines Zuverlässigkeitsfaktors zu berechnen, der anhand von Folgendem berechnet wird:

für den ersten Cluster, der Differenz zwischen der Clustermerkmalsgröße des ersten Clusters und der Objektmerkmalsgröße von jedem Objekt, das zu dem ersten Cluster gehört, die einen Umfang anzeigt, in dem die Objektmerkmalsgrößen in der Clustermerkmalsgröße erfasst werden, und
für den zweiten Cluster, der Differenz zwischen der Clustermerkmalsgröße des zweiten Clusters und der Objektmerkmalsgröße von jedem Objekt, das zu dem zweiten Cluster gehört.

5. Bildverwaltungsvorrichtung nach Anspruch 4, wobei die Objektpioritätsevaluierungseinheit dazu eingerichtet ist, wenn das Zielbild, in dem das erste Objekt enthalten ist, auch das zweite Objekt enthält, die Genauigkeit des ersten Objekts bezüglich des ersten Clusters zu berechnen, durch Ersetzen
des Konfidenzfaktors des ersten Objekts bezüglich des ersten Clusters, des Unterstützungsfaktors des ersten Objekts bezüglich des ersten Clusters, des Ähnlichkeitsfaktors des ersten Objekts bezüglich des ersten Clusters, des Zuverlässigkeitsfaktors des ersten Clusters und des Zuverlässigkeitsfaktors des zweiten Clusters
in einer logistischen Regressionsformel, in der ein Koeffizient, der eine Beziehung zwischen einer erklärenden Variablen und einer Zielvariablen definiert, durch Durchführen einer logistischen Regressionsanalyse an Lerndaten vorab definiert wird, bei welchen ein Objekt in einem Bild alleine vorhanden ist.

6. Bildverwaltungsvorrichtung nach Anspruch 3, wobei die Objektpioritätsevaluierungseinheit dazu eingerichtet ist, wenn das Zielbild, in dem das erste Objekt enthalten ist, auch das zweite Objekt enthält, die Genauigkeit des ersten Objekts bezüglich des ersten Clusters zu berechnen, durch Ersetzen des Konfidenzfaktors des ersten Objekts bezüglich des ersten Clusters, des Unterstützungsfaktors des ersten Objekts bezüglich des ersten Clusters, und des Ähnlichkeitsfaktors des ersten Objekts bezüglich des ersten Clusters,
in einer logistischen Regressionsformel, in der ein Koeffizient, der eine Beziehung zwischen einer erklärenden Variablen und einer Zielvariablen definiert, durch Durchführen einer logistischen Regressionsanalyse an Lerndaten vorab definiert wird, bei welchen ein Objekt in einem Bild alleine vorhanden ist.

7. Bildverwaltungsvorrichtung nach Anspruch 1, wobei die Objektpioritätsevaluierungseinheit dazu eingerichtet ist, die Genauigkeit für jedes der Objekte anhand Nicht-Kookkurrenzinformationen und des Ähnlichkeitsfaktors berechnen, wobei
die Nicht-Kookkurrenzinformationen Informationen sind, die sich auf die Kookkurrenz zwischen den Clustern beziehen und einen Nicht-Kookkurrenzgrad basierend auf der Anzahl von Malen von Nicht-Kookkurrenzbeziehungen enthalten, die in der Bildgruppe ermittelt werden, und

der Ähnlichkeitsfaktor den Umfang anzeigt, in dem die Objektmerkmalsgröße der einzelnen Objekte und eine Clustermerkmalsgröße des relevanten Clusters ähnliche Werte aufweisen.

8. Bildverwaltungsvorrichtung nach Anspruch 7, wobei die Objektpioritätsevaluierungseinheit dazu eingerichtet ist, wenn ein Zielbild, in dem ein Objekt enthalten ist, keine anderen Objekte enthält, Folgendes zu berechnen:

(i) die Genauigkeit des Objekts bezüglich des relevanten Clusters, unter Verwendung von Folgendem:

eines Konfidenzfaktors, der durch Teilen eines Nicht-Kookkurrenzgrades des relevanten Clusters oder eines anderen beliebigen Clusters, zu dem das eine Objekt nicht gehört, durch die Menge von Objekten berechnet wird, die zu dem relevanten Cluster gehören;
eines Unterstützungsfaktors, der durch Teilen des Nicht-Kookkurrenzgrades des relevanten Clusters durch die Gesamtmenge von Objekten berechnet wird, die von der Objektermittlungseinheit ermittelt werden; und
des Ähnlichkeitsfaktors des einen Objekts bezüglich des relevanten Clusters, und

(ii) den Evaluierungswert des einen Objekts bezüglich des relevanten Clusters und bezüglich eines beliebigen anderen Clusters, unter Verwendung von Folgendem:

der Genauigkeit des einen Objekts bezüglich des relevanten Clusters, und
der Quantität von Objekten, die zu dem relevanten Cluster gehören.

9. Bildverwaltungsvorrichtung nach Anspruch 2, wobei die Objektermittlungseinheit dazu eingerichtet ist, die Objektmerkmalsgröße von jedem der Objekte entsprechend einer Referenz zu extrahieren, die sich auf die Merkmalsgrößen eines menschlichen Gesichts bezieht.

10. Bildverwaltungsvorrichtung nach Anspruch 9, des Weiteren umfassend:

eine Entitätsermittlungseinheit, die dazu eingerichtet ist, eine oder mehrere Entitäten in jedem Bild durch Extrahieren von Entitätsmerkmalsgrößen basierend auf einer vorgegebenen Referenz zu ermitteln, wobei sich die Entitätsmerkmalsgrößen auf eine Verteilung von Pixelwerten für eine Vielzahl von Pixeln beziehen, die eine der Entitäten bilden, die in dem bestimmten Bild enthalten ist, wobei eine Entität ein Objekt ist, bei dem es sich nicht um ein menschliches Gesicht handelt; und
eine Entitätssortierungseinheit, die dazu eingerichtet ist, eine Entität, die in einem von der Bildaufnahmeeinheit aufgenommenen Bild ermittelt wird, in einen aus einer Vielzahl von Entitätsclustern zu sortieren, entsprechend der Entitätsmerkmalsgröße der Entität, wobei

die Objektpioritätsevaluierungseinheit dazu eingerichtet ist, wenn ein Bild, in dem ein Objekt enthalten ist, auch eine Entität enthält, den Evaluierungswert des einen Objekts bezüglich des relevanten Clusters zu berechnen, und bezüglich eines beliebigen anderen Clusters, zu dem das Objekt nicht gehört, des Weiteren unter Verwendung des Kookkurrenzgrades des relevanten Clusters bezüglich des relevanten Entitätsclusters, und
der Kookkurrenzgrad die Wahrscheinlichkeit des Phänomens repräsentiert, dass ein weiteres Objekt, welches zu dem relevanten Cluster gehört, in einem gemeinsamen Bild mit einer weiteren Einheit enthalten ist, die zu einem gemeinsamen Einheitscluster mit der Einheit gehört, die in dem bestimmten Bild mit dem einen Objekt enthalten ist, innerhalb der Bildgruppe, die von der Bildaufnahmeeinheit aufgenommen wird.

11. Bildverwaltungsvorrichtung nach Anspruch 1, wobei die Objektsortierungseinheit dazu eingerichtet ist, ein Objekt in die Vielzahl von Clustern entsprechend des k-Mittelwertverfahrens zu sortieren.

12. Bildverwaltungsvorrichtung nach Anspruch 1, wobei die Objektpioritätsevaluierungseinheit dazu eingerichtet ist, die Objektpriorität unter Verwendung eines Zuverlässigkeitsfaktors für jeden Cluster zu berechnen, wobei der Zuverlässigkeitsfaktor anhand der Differenz zwischen der Clustermerkmalsgröße der einzelnen Cluster unter Objektmerkmalsgröße der einzelnen Objekte berechnet wird, die zu jedem Cluster gehören, die einen Umfang anzeigt, in dem die Objektmerkmalsgrößen in jeder der Clustermerkmalsgrößen erfasst werden.

13. Bildverwaltungsverfahren, umfassend:

einen Bildaufnahmeschritt zum Aufnehmen einer Bildgruppe;
einen Objektermittlungsschritt zum Ermitteln, für jedes Bild, das in dem Bildaufnahmeschritt aufgenommen wird, von einem oder mehreren Objekten, die in dem Bild enthalten sind;
einen Objektsortierungsschritt zum Sortieren der Objekte, die in jedem Bild, das in dem Bildaufnahmeschritt aufgenommen wird, ermittelt werden, in einen aus einer Vielzahl von Clustern, entsprechend einer Objektmerkmalsgröße, die ein Merkmal des Objekts repräsentiert;
einen Objektprioritätsevaluierungsschritt zum Berechnen einer Objektpriorität für jedes der Objekte durch Berechnen eines Evaluierungswertes für das Objekt anhand einer Genauigkeit, welche die Relevanz des Objekts für einen relevanten Cluster repräsentiert, und der relativen Menge von Objekten, die zu dem relevanten Cluster gehören; und
einen Bildprioritätsevaluierungsschritt zum Berechnen einer Bildpriorität für jedes Bild durch Summieren der Objektprioritäten, die für die im Bild enthaltenen Objekte berechnet werden, wobei

wobei der Bildprioritätsevaluierungsschritt Folgendes involviert: (i) Berechnen eines Ähnlichkeitsfaktors, der anzeigt, wie ähnlich die Objektmerkmalsgröße des Objekts einer Clustermerkmalsgröße des relevanten Clusters ist, wobei die Clustermerkmalsgröße ein repräsentativer Wert der Objektmerkmalsgrößen von Objekten in dem relevanten Cluster ist, (ii) Berechnen, wenn das Bild ein weiteres Objekt enthält, das in einen anderen als den relevanten Cluster sortiert wurde, eines Kookkurrenzgrades, der einen Zähler der Kookkurrenz des Objekts und des anderen Objekts in den Bildern der Bildgruppe anzeigt, und (iii) Berechnen der Genauigkeit basierend auf dem Ähnlichkeitsfaktor und den Kookkurrenzinformationen, welche den Kookkurrenzgrad enthalten.

14. Computerprogramm, umfassend Befehle, die bei Ausführung des Programms auf einem Computer den Computer dazu veranlassen, die Schritte des Verfahrens nach Anspruch 13 auszuführen.

15. Aufzeichnungsmedium, auf welchem das computerausführbare Programm nach Anspruch 14 aufgezeichnet ist.

16. Integrierte Schaltung, umfassend eine Bildverwaltungsvorrichtung nach Anspruch 1.

## Revendications

1. Dispositif de gestion d'image, comprenant :

une unité d'acquisition d'image (201) adaptée pour acquérir un groupe d'images ;
une unité de détection d'objet (203) adaptée pour détecter, pour chaque image (302) acquise par l'unité d'acquisition d'image (201), un ou plusieurs objets inclus dans l'image (302) ;
une unité de tri d'objet (207) adaptée pour trier les objets détectés dans chaque image (302) acquise par l'unité d'acquisition d'image (201) dans un d'une pluralité de clusters (701a-c), selon une quantité de caractéristiques d'objet représentant des caractéristiques de chacun des objets ;
une unité d'évaluation de priorité d'objet (213, 214) adaptée pour calculer une priorité d'objet pour chacun des objets, en calculant une valeur d'évaluation pour l'objet à partir d'une pertinence de représentation de précision de l'objet par rapport à un cluster pertinent et la quantité relative d'objets appartenant au cluster pertinent ; et
une unité d'évaluation de priorité d'image (215) adaptée pour calculer une priorité d'image pour chaque image en additionnant des priorités d'objet calculées pour les objets inclus dans l'image, dans lequel

l'unité d'évaluation de priorité d'objet (210, 212, 214) est adaptée

(i) pour calculer un facteur de similarité qui indique dans quelle mesure la quantité de caractéristiques d'objet de l'objet est similaire à une quantité de caractéristiques de cluster du cluster pertinent, dans lequel la quantité de caractéristiques de cluster est une valeur représentative de quantités de caractéristiques d'objet dans le cluster pertinent,
(ii) pour calculer, lorsque l'image inclut un autre objet trié dans un cluster autre que le cluster pertinent, un degré de co-occurrence indiquant un compte de co-occurrence de l'objet et du dit autre objet dans les images du groupe d'images, et
(iii) pour calculer la précision selon le facteur de similarité et des informations de co-occurrence qui incluent le degré de co-occurrence.

2. Le dispositif de gestion d'image de la revendication 1, dans lequel l'unité d'évaluation de priorité d'objet est adaptée pour calculer la priorité d'objet d'un objet à partir de :

la valeur d'évaluation et
une valeur d'évaluation de l'objet par rapport à un cluster autre que le cluster pertinent, calculée à partir de la quantité d'objets appartenant à l'autre cluster, et un facteur de similarité de la quantité de caractéristiques d'objet de l'objet par rapport à une quantité de caractéristiques de cluster de l'autre cluster, dans lequel la quantité de caractéristiques de cluster est une valeur représentative de quantités de caractéristiques d'objet d'objets dans l'autre cluster.

3. Le dispositif de gestion d'image de la revendication 2, dans lequel
l'unité d'évaluation de priorité d'objet est adaptée pour calculer, lorsqu'une image cible dans laquelle un premier objet est inclus inclut également un deuxième objet, la précision du premier objet par rapport à un premier cluster qui inclut le premier objet au moyen d'un facteur de confiance, un facteur de soutien et le facteur de similarité pour le premier objet par rapport au premier cluster, dans lequel
le facteur de confiance du premier objet par rapport au premier cluster est calculé en divisant le degré de co-occurrence du premier cluster avec un deuxième cluster auquel le deuxième objet appartient par la quantité d'objets appartenant au deuxième cluster, et
le facteur de soutien du premier objet par rapport au premier cluster est calculé en divisant le degré de co-occurrence du premier cluster avec le deuxième cluster par la quantité totale d'objets détectés par l'unité de détection d'objets.

4. Le dispositif de gestion d'image de la revendication 3, dans lequel
l'unité d'évaluation de priorité d'objet est adaptée pour calculer, lorsque l'image cible dans laquelle le premier objet est inclus inclut également le deuxième objet, la précision utilisant en outre un facteur de fiabilité calculé à partir de :

pour le premier cluster, la différence entre la quantité de caractéristiques de cluster du premier cluster et la quantité de caractéristiques d'objet de chaque objet appartenant au premier cluster, indiquant une mesure dans laquelle les quantités de caractéristiques d'objet sont collectées dans la quantité de caractéristiques de cluster, et
pour le deuxième cluster, la différence entre la quantité de caractéristiques de cluster du deuxième cluster et la quantité de caractéristiques d'objet de chaque objet appartenant au deuxième cluster.

5. Le dispositif de gestion d'image de la revendication 4, dans lequel
l'unité d'évaluation de priorité d'objet est adaptée pour calculer, lorsque l'image cible dans laquelle le premier objet est inclus inclut également le deuxième objet, la précision du premier objet par rapport au premier cluster en remplaçant
le facteur de confiance du premier objet par rapport au premier cluster, le facteur de soutien du premier objet par rapport au premier cluster, le facteur de similarité du premier objet par rapport au premier cluster, le facteur de fiabilité du premier cluster et le facteur de fiabilité du deuxième cluster
dans une formule de régression logistique dans laquelle un coefficient définissant une relation entre une variable explicative et une variable cible est prédéfini en procédant à une analyse de régression logistique sur des données d'apprentissage dans lesquelles un objet existe seul dans une image.

6. Le dispositif de gestion d'image de la revendication 3, dans lequel
l'unité d'évaluation de priorité d'objet est adaptée pour calculer, lorsque l'image cible dans laquelle le premier objet est inclus inclut également le deuxième objet, la précision du premier objet par rapport au premier cluster en remplaçant
le facteur de confiance du premier objet par rapport au premier cluster, le facteur de soutien du premier objet par rapport au premier cluster et le facteur de similarité du premier objet par rapport au premier cluster
dans une formule de régression logistique dans laquelle un coefficient définissant une relation entre une variable explicative et une variable cible est prédéfini en procédant à une analyse de régression logistique sur des données d'apprentissage dans lesquelles un objet existe seul dans une image.

7. Le dispositif de gestion d'image de la revendication 1, dans lequel
l'unité d'évaluation de priorité d'objet est adaptée pour calculer la précision de chacun des objets à partir d'informations de non-co-occurrence et du facteur de similarité, dans lequel
les informations de non-co-occurrence sont des informations relatives à une co-occurrence entre les clusters et incluent un degré de non-co-occurrence selon le nombre de fois que des relations de non-co-occurrence sont détectées au sein du groupe d'images, et
le facteur de similarité indique la mesure dans laquelle la quantité de caractéristiques d'objet de chacun des objets et une quantité de caractéristiques de cluster du cluster pertinent présentent des valeurs similaires.

8. Le dispositif de gestion d'image de la revendication 7, dans lequel
l'unité d'évaluation de priorité d'objet est adaptée pour calculer, lorsqu'une image cible dans laquelle un objet est inclus n'inclut aucun autre objet :

(i) la précision de l'objet par rapport au cluster pertinent, en utilisant :

un facteur de confiance calculé en divisant un degré de non-co-occurrence du cluster pertinent, ou de tout autre cluster auquel l'un objet n'appartient pas, par la quantité d'objets appartenant au cluster pertinent ; un facteur de soutien calculé en divisant le degré de non-co-occurrence du cluster pertinent par la quantité totale d'objets détectés par l'unité de détection d'objet ; et le facteur de similarité de l'un objet par rapport au cluster pertinent, et

(ii) la valeur d'évaluation de l'un objet par rapport au cluster pertinent, et par rapport à toute autre cluster, en utilisant :

la précision de l'un objet par rapport au cluster pertinent ; et La quantité d'objets appartenant au cluster pertinent.

9. Le dispositif de gestion d'image de la revendication 2, dans lequel l'unité de détection d'objet est adaptée pour extraire la quantité de caractéristiques d'objet de chacun des objets selon une référence relative à des quantités de caractéristiques d'un visage humain.

10. Le dispositif de gestion d'image de la revendication 9, comprenant en outre :

une unité de détection d'entité adaptée pour détecter une ou plusieurs entités dans chaque image en extrayant des quantités de caractéristiques d'entité selon une référence prédéterminée, les quantités de caractéristiques d'entité relatives à une répartition de valeurs de pixel pour une pluralité de pixels constituant une des entités incluses dans l'image particulière, dans lequel une entité est un objet qui n'est pas un visage humain ; et une unité de tri d'entité adaptée pour trier une entité détectée dans une image acquise par l'unité d'acquisition d'image dans un d'une pluralité de clusters d'entités, selon la quantité de caractéristiques d'entité de l'entité, dans lequel l'unité d'évaluation de priorité d'objet est adaptée pour calculer, lorsqu'une image dans laquelle un objet est inclus inclut également une entité, la valeur d'évaluation de l'un objet par rapport au cluster pertinent, et par rapport à tout autre cluster auquel l'objet n'appartient pas, en utilisant en outre le degré de co-occurrence du cluster pertinent par rapport au cluster d'entités pertinent, et le degré de co-occurrence représente la probabilité du phénomène d'un autre objet appartenant au cluster pertinent étant inclus dans une image commune avec une autre entité appartenant à un cluster d'entités commun avec l'entité incluse dans l'image particulière avec l'un objet, au sein du groupe d'images acquises par l'unité d'acquisition d'image.

11. Le dispositif de gestion d'image de la revendication 1, dans lequel l'unité de tri d'objet est adaptée pour trier un objet dans la pluralité de clusters conformément au procédé des k-moyennes.

12. Le dispositif de gestion d'image de la revendication 1, dans lequel l'unité d'évaluation de priorité est adaptée pour calculer la priorité d'objet en utilisant un facteur de fiabilité pour chaque cluster, le facteur de fiabilité étant calculé à partir de la différence entre la quantité de caractéristiques de cluster de chaque cluster et la quantité de caractéristiques d'objet de chaque objet appartenant à chaque cluster, indiquant une mesure dans laquelle les quantités de caractéristiques d'objet sont collectées dans chacune des quantités de caractéristiques de cluster.

13. Procédé de gestion d'image, comprenant :

une étape d'acquisition d'image pour acquérir un groupe d'images ; une étape de détection d'objet pour détecter, pour chaque image acquise à l'étape d'acquisition d'image, un ou plusieurs objets inclus dans l'image ; une étape de tri d'objet pour trier les objets détectés dans chaque image acquise à l'étape d'acquisition d'image dans un d'une pluralité de clusters, selon une quantité de caractéristiques d'objet représentant une caractéristique de l'objet ; une étape d'évaluation de priorité d'objet pour calculer une priorité d'objet pour chacun des objets, en calculant une valeur d'évaluation pour l'objet à partir d'une pertinence de représentation de précision de l'objet par rapport à un cluster pertinent et la quantité relative d'objets appartenant au cluster pertinent ; et une étape d'évaluation de priorité d'image adaptée pour calculer une priorité d'image pour chaque image en additionnant des priorités d'objet calculées pour des objets inclus dans l'image ; dans lequel

l'étape d'évaluation de priorité d'objet implique

(i) calcul d'un facteur de similarité qui indique dans quelle mesure la quantité de caractéristiques d'objet de l'objet est similaire à une quantité de caractéristiques de cluster du cluster pertinent, où la quantité de caractéristiques de cluster est une valeur représentative de quantités de caractéristiques d'objet dans le cluster pertinent,

(ii) calcul, lorsque l'image inclut un autre objet trié dans un cluster autre que le cluster pertinent, d'un degré de co-occurrence indiquant un compte de co-occurrence de l'objet et du dit autre objet dans les images du groupe d'images, et

(iii) calcul de la précision selon le facteur de similarité et des informations de co-occurrence qui incluent le degré de co-occurrence.

14. Programme informatique comprenant des instructions qui, lorsque le programme est exécuté par un ordinateur, font exécuter à l'ordinateur les étapes du procédé de la revendication 13.

15. Support d'enregistrement sur lequel est enregistré le programme exécutable par un ordinateur selon la revendication 14.

16. Circuit intégré, comprenant un dispositif de gestion d'image selon la revendication 1.

FIG. 1

Image management system 10

Display device 120

Image management device 100

Imaging device 110

Controller 130

FIG. 2

Image management system 10

Imaging device 110

Image management device 100

Image storage unit 202

Image acquisition unit 201

Object sorting unit 207

Object detection unit 203

Template storage unit 204

Cluster feature storage unit 208

Object occurrence information storage unit 205

Object feature storage unit 206

Cluster sorting information storage unit 209

Co-occurrence information generation unit 210

Similarity calculation unit 211

Accuracy calculation unit 212

Evaluation value calculation unit 213

Image ranking unit 216

Image priority evaluation unit 215

Object priority evaluation unit 214

Image output unit 217

Control input unit 218

Display device 120

Controller 130

FIG. 3

300

| Image ID<br>301 | Image data<br>302 |
|---|---|
| I001 | 302a |
| I002 | 302b |
| I003 | 302c |
| I004 | 302d |
| ⋮ | ⋮ |

# FIG. 4

302a
401a
401b
O001
O002

302b
401c
401d
401e
O003
O004
O005

402

302c
401f
O006

302d

No objects

FIG. 5

_500_

| Image ID | Object ID |
|----------|-----------|
| I001 | O001、O002 |
| I002 | O003、O004、O005 |
| I003 | O006 |
| I004 | |
| ⋮ | ⋮ |

301　　　　　　　　　　402

FIG. 6

/402    /601

| Object ID | Object feature | | | |
|-----------|----------------|----------------|----------------|-------|
| | Feature component 1 | Feature component 2 | Feature component 3 | ・・・ |
| O001 | 90.3 | 98.4 | 71.4 | ・・・ |
| O002 | 59.2 | 92.9 | 96.0 | ・・・ |
| O003 | 98.6 | 80.8 | 82.4 | ・・・ |
| ・<br>・<br>・ | ・<br>・<br>・ | ・<br>・<br>・ | ・<br>・<br>・ | ・<br>・<br>・ |

FIG. 7

700

703
C001

701a

703
C002

701b

601f

702a ✕

601c

601a

601g

702b ✕

601b

601d

601i

601h

702c ✕

704

601e

C003

701c

703

FIG. 8

| Cluster ID | Cluster feature | | | |
|---|---|---|---|---|
| | Feature component 1 | Feature component 2 | Feature component 3 | . . . |
| C001 | 94.4 | 90.2 | 79.8 | . . . |
| C002 | 61.5 | 88.8 | 90.1 | . . . |
| C003 | 75.8 | 70.5 | 80.1 | . . . |
| . . . | . . . | . . . | . . . | . . . |

FIG. 9

900

| Cluster ID /703 | Object ID /402 | Quantity /901 |
|---|---|---|
| C001 | O001、O003、O006… | 30 |
| C002 | O002、O004、O007… | 27 |
| C003 | O005、O008、O009… | 20 |
| ⋮ | ⋮ | ⋮ |
| Total | | 200 |

# FIG. 10

FIG. 11

1100

| | Co-occurrence degree | | | | Non-cooccurrence degree |
|---|---|---|---|---|---|
| Second cluster / First cluster | C001 | C002 | C003 | · · · | None |
| C001 | 0 | 8 | 2 | · · · | 5 |
| C002 | 8 | 0 | 10 | · · · | 0 |
| C003 | 2 | 10 | 0 | · · · | 9 |
| ⋮ | ⋮ | ⋮ | ⋮ | ⋮ | ⋮ |

FIG. 12

1201

| | Similarity | | | |
|---|---|---|---|---|
| Cluster ID ⟍ Object ID | C001 | C002 | C003 | · · · |
| O001 | 0.89 | 0.01 | 0.50 | · · · |
| O002 | 0.03 | 0.82 | 0.11 | · · · |
| O003 | 0.50 | 0.46 | 0.42 | · · · |
| ⋮ | ⋮ | ⋮ | ⋮ | ⋮ |

FIG. 13

1301

| Cluster ID  Object ID | Accuracy | | | |
|---|---|---|---|---|
| | C001 | C002 | C003 | . . . |
| O001 | 0. 90 | 0. 02 | 0. 51 | . . . |
| O002 | 0. 02 | 0. 84 | 0. 04 | . . . |
| O003 | 0. 46 | 0. 53 | 0. 39 | . . . |
| ⋮ | ⋮ | ⋮ | ⋮ | ⋮ |

## FIG. 14

1401

| | Evaluation value | | | |
|---|---|---|---|---|
| Cluster ID<br><br>Object ID | C001 | C002 | C003 | ・・・ |
| O001 | 26. 9 | 0. 52 | 10. 1 | ・・・ |
| O002 | 0. 64 | 22. 7 | 0. 82 | ・・・ |
| O003 | 13. 8 | 14. 2 | 7. 77 | ・・・ |
| ⋮ | ⋮ | ⋮ | ⋮ | ⋮ |

## FIG. 15

| Object ID | Object priority |
|-----------|-----------------|
| O001 | 40.3 |
| O002 | 25.6 |
| O003 | 38.1 |
| ⋮ | ⋮ |

## FIG. 16

| Image ID | Image priority |
|----------|----------------|
| I001 | 65.9 |
| I002 | 89.4 |
| I003 | 28.8 |
| I004 | 0 |
| ⋮ | ⋮ |

FIG. 17

1700

| Rank | Image ID | Image data | Image priority |
|------|----------|------------|----------------|
| 1st | I017 | | 128 |
| 2nd | I002 | | 89.4 |
| 3rd | I001 | | 65.9 |
| 4th | I072 | | 64.0 |
| ⋮ | ⋮ | ⋮ | ⋮ |

FIG. 18

START

S1801 — Acquire image group from imaging device

S1802 — Object detection

S1803 — Object sorting

S1804 — Calculate similarity between objects and clusters

S1805 — Calculation complete for all clusters?
No → (loop back)
Yes ↓

S1806 — Calculation complete for all objects?
No → (loop back)
Yes ↓

S1807 — Co-occurrence information generation

S1808 — Evaluation value calculation for objects with respect to clusters

S1809 — Calculation complete for all clusters?
No → (loop back)
Yes ↓

S1810 — Evaluate object priority

S1811 — Evaluation complete for all objects?
No → (loop back)
Yes ↓

S1812 — Evaluate image priority

S1813 — Evaluation complete for all images?
No → (loop back)
Yes ↓

S1814 — Rank image group by image priority

S1815 — Display results on display device

END

FIG. 19

FIG. 20

Accuracy calculation start

S2001
Quantity of objects in image including object j?

1

2 or more

S2002
Select object x among objects included with object j

S2003
Obtain cluster X to which object x belongs

S2004
Calculate confidence, support from co-occurrence of cluster I and cluster X

S2005
Unused objects remain?

Yes

No

S2006
Select confidence, support of object with greatest support

S2007
Calculate accuracy from similarity, confidence, support

S2008
Calculate confidence, support from non-cooccurrence degree of cluster I

S2009
Calculate accuracy from similarity, confidence, support

Accuracy calculation end

FIG. 21

| Second cluster / First cluster | Co-occurrence confidence factor | | | | Non-cooccurrence confidence factor |
|---|---|---|---|---|---|
| | C001 | C002 | C003 | · · · | |
| C001 | 0.00 | 0.30 | 0.10 | · · · | 0.17 |
| C002 | 0.27 | 0.00 | 0.50 | · · · | 0.00 |
| C003 | 0.07 | 0.37 | 0.00 | · · · | 0.45 |
| ⋮ | ⋮ | ⋮ | ⋮ | ⋮ | ⋮ |

FIG. 22

2200

2201                                           2202

|  | Co-occurrence support factor | | | | Non-cooccurrence support factor |
|---|---|---|---|---|---|
| Second cluster / First cluster | C001 | C002 | C003 | · · · | |
| C001 | 0.00 | 0.04 | 0.01 | · · · | 0.03 |
| C002 | 0.04 | 0.00 | 0.05 | · · · | 0.00 |
| C003 | 0.01 | 0.05 | 0.00 | · · · | 0.05 |
| ⋮ | ⋮ | ⋮ | ⋮ | ⋮ | ⋮ |

## FIG. 23

Variant image
management device 2300

FIG. 24

FIG. 25

302c

401f

No co-occurring entities

302d

2501a

B001

302e

B002

2501b

401g

401h

2502

302f

B003

401i

2501c

FIG. 26

2600

| Image ID | Entity ID |
|----------|-----------|
| ⋮ | ⋮ |
| I003 | |
| I004 | B001 |
| I005 | B002 |
| I006 | B003 |
| ⋮ | ⋮ |

FIG. 27

2700

| Entity cluster ID | Entity ID | Quantity |
|---|---|---|
| BC001 | B001、B003… | 21 |
| BC002 | B002、B005… | 5 |
| BC003 | B004、B006… | 10 |
| ⋮ | ⋮ | ⋮ |
| Total | | 190 |

FIG. 28

2800

2801

| Entity cluster / Cluster | Co-occurrence degree | | | |
|---|---|---|---|---|
| | BC001 | BC002 | BC003 | · · · |
| C001 | 0 | 3 | 5 | · · · · |
| C002 | 4 | 1 | 3 | · · · · |
| C003 | 10 | 1 | 8 | · · · · |
| ⋮ | ⋮ | ⋮ | ⋮ | ⋮ |

FIG. 29

```
                    START
                      |
                      | S1801
                      v
              Acquire
            image group
                      |
                      | S1802
                      v
            Object detection
                      |
                      | S1803
                      v
             Object sorting
                      |
                      | S2901
                      v
             Co-occurring
            entity detection
                      |
                      | S2902
                      v
             Co-occurring
             entity sorting
                      |
         +----------->|
         |  +-------->|
         |  |         | S1804
         |  |         v
         |  |  Calculate similarity
         |  |         |
         |  |         | S1805
         |  |         v
         |  | No  Calculation
         |  +----  complete for all
         |         clusters?
         |            |
         |            | Yes
         |            | S1806
         |            v
         | No     Calculation
         +------  complete for all
                  objects?
                      |
                      | Yes    S1807a
                      v
                 Co-occurrence
                  information
                  generation
```

```
                    S1808a
                      v
             Evaluation value
             calculation for
               objects with
            respect to clusters
                      |
                      | S1809
                      v
        No      Calculation
      +-----  complete for all
      |        clusters?
      |           |
      |           | Yes
      |           | S1810
      |           v
      |        Evaluate
      |      object priority
      |           |
      |           | S1811
      |           v
      | No     Evaluation
      +-----  complete for all
               objects?
                  |
                  | Yes
                  | S1812
                  v
               Evaluate
             image priority
                  |
                  | S1813
                  v
      No       Evaluation
    +------  complete for all
    |          images?
    |            |
    |            | Yes
    |            | S1814
    |            v
    |        Rank image group
    |        by image priority
                  |
                  | S1815
                  v
                Display
               results on
              display device
                  |
                  v
                 END
```

64

## FIG. 30

```
Co-occurrence information
     generation start
```

S3001
Image contains objects?
— Yes →
— No →

S3003
Contains entities?
— Yes →
— No →

S3004
Obtain cluster A to which object a belongs

S3005
Obtain cluster B to which object b belongs

S3006
Increment co-occurrence degree of cluster A and cluster B by 1

S3007
Used all entities in image?
— No →
— Yes →

S3008
Used all objects in image?
— No →
— Yes →

S3002
Generation complete for all images?
— No →
— Yes →

```
Co-occurrence information
     generation end
```

## FIG. 31

Accuracy calculation start

S3101 **Entities present in image including object j?**

No →

Yes ↓

S3102 Select entity x among objects included with object j

S3103 Obtain entity X to which entity x belongs

S3104 Calculate confidence, support from co-occurrence of cluster I and entity cluster X

S3105 **Unused entities remain?**

Yes →

No ↓

S3106 Select confidence, support of entity with greatest support

S3107 Calculate accuracy from similarity, confidence, support

S3108 Set accuracy to 0

Accuracy calculation end

66

FIG. 32

3200

3201

| | Co-occurrence confidence factor | | | |
|---|---|---|---|---|
| Entity cluster<br><br>Cluster | BC001 | BC002 | BC003 | · · · |
| C001 | 0.00 | 0.60 | 0.50 | · · · |
| C002 | 0.19 | 0.20 | 0.30 | · · · |
| C003 | 0.48 | 0.20 | 0.80 | · · · |
| ⋮ | ⋮ | ⋮ | ⋮ | ⋮ |

FIG. 33

3300

3301

| Entity cluster  Cluster | Co-occurrence support factor | | | |
|---|---|---|---|---|
| | BC001 | BC002 | BC003 | · · · |
| C001 | 0.000 | 0.008 | 0.013 | · · · |
| C002 | 0.010 | 0.003 | 0.008 | · · · |
| C003 | 0.026 | 0.003 | 0.021 | · · · |
| ⋮ | ⋮ | ⋮ | ⋮ | ⋮ |

FIG. 34

Accuracy calculation start

S3401 — Quantity of objects in image including object j?

1

2 or more

S3403 — Entities present in image including object j?

No

Yes

S3402 — Accuracy calculation using co-occurrence degree between clusters

S3404 — Accuracy calculation using co-occurrence degree of clusters with respect to entity clusters

S3405 — Accuracy calculation using non-cooccurrence degree for cluster

Accuracy calculation end



# FIG. 35

Image management device 3500

FIG. 36

3600

|   703   |   3601   |
|---|---|
| Cluster ID | Reliability degree |
| C001 | 0.09 |
| C002 | 0.13 |
| C003 | 0.32 |
| : | : |

FIG. 37

START

↓ S1801

Acquire image group
from imaging device

↓ S1802

Object detection

↓ S1803

Object sorting

↓ S3701

Reliability
calculation

↓ S1804

Calculate similarity
between objects
and clusters

↓ S1805

Calculation
complete for all
clusters? —No→

↓ Yes S1806

Calculation
complete for all
objects? —No→

↓ Yes S1807

Co-occurrence
information
generation

S1808b

Evaluation value
calculation for
objects with
respect to clusters

↓ S1809

Calculation
complete for all
clusters? —No→

↓ Yes S1810

Evaluate
object priority

↓ S1811

Evaluation
complete for all
objects? —No→

↓ Yes S1812

Evaluate
image priority

↓ S1813

Evaluation
complete for all
images? —No→

↓ Yes S1814

Rank image group
by image priority

↓ S1815

Display
results on
display device

↓

END

FIG. 38

```
        ┌─────────────────────────────┐
        │  Reliability calculation start │
        └─────────────┬───────────────┘
                      │                    ╭─ S3801
          ┌───────────▼───────────┐
          │      Extract          │
          │   cluster feature     │
          └───────────┬───────────┘
                      │                    ╭─ S3802
          ┌───────────▼───────────┐
          │     Choose one        │
          │   object belonging    │
          │     to cluster        │
          └───────────┬───────────┘
                      │                    ╭─ S3803
          ┌───────────▼───────────┐
          │   Obtain object       │
          │    feature of         │
          │  selected object      │
          └───────────┬───────────┘
                      │                    ╭─ S3804
          ┌───────────▼───────────┐
          │ Calculate difference  │
          │ between cluster feature│
          │  and object feature   │
          └───────────┬───────────┘
                      │                    ╭─ S3805
                ◇─────▼─────◇
          No    Calculation
        ◁───── complete for all objects
                belonging to
                  cluster?
                ◇─────┬─────◇
                   Yes│                    ╭─ S3806
          ┌───────────▼───────────┐
          │   Divide total of     │
          │  absolute value of    │
          │ calculated difference by│
          │  quantity of objects  │
          └───────────┬───────────┘
                      │                    ╭─ S3807
          ┌───────────▼───────────┐
          │   Take inverse of     │
          │  result as reliability │
          └───────────┬───────────┘
                      │                    ╭─ S3808
                ◇─────▼─────◇
          No    Reliability
        ◁───── calculation complete
                for all clusters?
                ◇─────┬─────◇
                   Yes│
        ┌─────────────▼───────────────┐
        │  Reliability calculation end │
        └─────────────────────────────┘
```

FIG. 39

Accuracy calculation start

S2001 Quantity of objects in image containing object j?

1 → S2008 Calculate confidence, support for cluster I from non-cooccurrence degree

2 or more

S2002 Select object x among objects included with object j

S2003 Obtain cluster X to which object x belongs

S2004 Calculate confidence, support from co-occurrence of cluster I and entity cluster X

S2005 Unused objects remain? — Yes

S2006 No — Select confidence, support of object with greatest support

S3901 Obtain reliability

S3902 Calculate accuracy from similarity, confidence, support, reliability

S3903 Obtain reliability

S3904 Calculate accuracy from similarity, confidence, support, reliability

Accuracy calculation end

**EP 2 528 034 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004046591 A
- JP 2005020446 A
- US 2005105803 A1